# EUROPEAN PATENT APPLICATION

(11) **EP 3 467 001 A1**
(43) Date of publication of application: **10.04.2019**
(21) Application number: 17806892.0
(22) Date of filing: 27.04.2017
(51) Int. Cl.: C08G 63/12, C09D 167/00, C09D 5/03, C08G 63/78, C08G 63/16

(54) **POLYESTER RESIN COMPRISING BIOMASS-DERIVED MONOMER AND PREPARATION METHOD THEREFOR, AND POWDER PAINT COMPOSITION COMPRISING RESIN**

(30) Priority: 30.05.2016 KR 20160066633; 30.05.2016 KR 20160066649; 30.05.2016 KR 20160066665
(71) Applicant: Samyang Corporation, Seoul 03129 (KR); Inopol Co., Ltd., Gyeongsangham-do 50340 (KR)
(72) Inventor: IM, Jun Seop, Daejeon 35246 (KR); RYU, Hoon, Daejeon 35235 (KR); YOO, Seung Hyun, Daejeon 34933 (KR); JUNG, Suel Ki, Daejeon 35203 (KR); CHOO,Jae Young, Busan 47798 (KR); JANG, Young Kyu, Gimhae-si Gyeongsangnam-do 50990 (KR); KIM, Kyu Hyung, Busan 49089 (KR); KIM, Ji Hwan, Changwon-si Gyeongsangnam-do 51380 (KR); NOH, Gyu Seok, Gimhae-si Gyeongsangnam-do 50953 (KR); LEE, Geun Woo, Changwon-si Gyeongsangnam-do 51334 (KR)
(74) Representative: Kordel, Mattias
(86) International application number: PCT/KR2017/004525
(87) International publication number: WO 2017/209399

(57) **Abstract**

The present invention relates to a polyester resin comprising a biomass-derived monomer and a preparation method therefor, and a powder paint composition comprising the resin and, more specifically, to a polyester resin and a preparation method therefor, and a powder paint composition comprising the resin, wherein the polyester resin comprises, as a repeat unit, a biomass-derived unit having improved reactivity and being derived from an anhydrosugar alcohol or a derivative thereof, thereby solving the problem of the depletion of petroleum resources corresponding to limited resources, exhibiting eco-friendliness and high-heat resistance, and remarkably improving weather resistance and flexibility of a coating film when used for a powder paint.

## Description

### [TECHNICAL FIELD]

The present invention relates to a polyester resin comprising a monomer derived from a biomass, a process for preparing the same, and a powder coating composition comprising the resin, and more specifically, to a polyester resin comprising a unit derived from a biomass-derived anhydrosugar alcohol or a derivative thereof having improved reactivity, which can solve the problem of depletion of finite petroleum resources, is eco-friendly, has high heat resistance, and can remarkably improve the weatherability and flexibility of the coating film when used in powder coatings, a process for preparing the same, and a powder coating composition comprising the resin.

### [BACKGROUND ART]

Hydrogenated sugar (also referred "sugar alcohol") refers to a compound obtained by adding hydrogen to the reducing terminal group of a saccharide. Generally, it has the formula HOCH₂(CHOH)ₙCH₂OH (wherein n is an integer of 2 to 5), and is classified into tetritol, pentitol, hexitol and heptitol (having 4, 5, 6 and 7 carbon atoms, respectively) depending on the number of carbon atoms. Among them, hexitol having 6 carbon atoms includes sorbitol, mannitol, iditol, galactitol and the like, and sorbitol and mannitol are particularly useful substances.

Anhydrous alcohol has a diol form with two hydroxyl groups in the molecule and can be prepared by utilizing hexitol derived from starch (for instance, Korean Patent No. 10-1079518 and Korean Patent Laid-open Publication No. 10-2012-0066904). Since anhydrous alcohol is an eco-friendly substance derived from renewable natural resources, there has been much interest for a long time and studies on the production method have been carried out. Among these anhydrous alcohols, isosorbide prepared from sorbitol has the largest industrial application range at present.

Anhydrous alcohol is widely used in the treatment of cardiac and vascular diseases, adhesives for patches, drugs for mouthwash and the like, solvents for compositions in the cosmetics industry, and emulsifiers in the food industry. In addition, it is possible to increase the glass transition temperature of a polymer such as polyester, PET, polycarbonate, polyurethane and epoxy resin, and to improve the strength of these materials, and it is also very useful in the plastics industry such as bioplastics since it is an eco-friendly material derived from natural materials. It is also known to be used as an eco-friendly solvent for adhesives, eco-friendly plasticizers, biodegradable polymers, and water-soluble lacquers.

As such, anhydrous alcohol has attracted a great deal of attention due to its versatility and its use in industry is increasing.

Korean Patent Laid-Open Publication No. 10-2012-0113883 discloses a polyester resin for a liquid paint having an alcohol functional group, which is obtained by copolymerizing a dibasic acid component, a diol component including isosorbide, and lactic acid or a derivative thereof together in a single step. However, since lactic acid has both alcohol and acid functional groups, the competitive reaction proceeds selectively. Therefore, in the method for preparing the polyester resin disclosed in the above document, there is a disadvantage in that the reactivity is lowered and the reaction takes a long time, and there is a problem in that the color of the prepared resin becomes worse as the reaction time becomes longer, and the dispersion workability and heat resistance deteriorate.

### [CONTENTS OF THE INVENTION]

### [PROBLEMS TO BE SOLVED]

The present invention is intended to resolve the above-stated problems of the prior arts, and has an object of providing a polyester resin comprising a unit derived from a biomass-derived anhydrosugar alcohol or a derivative thereof having improved reactivity, which can solve the problem of depletion of finite petroleum resources, is eco-friendly, has high heat resistance, and can remarkably improve the weatherability and flexibility of the coating film when used in powder coatings, a process for preparing the same, and a powder coating composition comprising the resin.

### [TECHNICAL MEANS]

In order to resolve the above-stated problems, the present invention provides a polyester resin comprising: a repeating unit comprising a unit derived from an anhydrosugar alcohol or a derivative thereof; and a repeating unit derived from a polybasic acid component.

In another aspect, the present invention provides a method for preparing a polyester resin, comprising the steps of: (1) preparing a prepolymer by reacting a repeating unit comprising a unit derived from an anhydrosugar alcohol or a derivative thereof with a polybasic acid component; and (2) preparing a polyester resin by reacting the prepolymer prepared in step (1) with a polybasic acid component.

In still another aspect, the present invention provides a powder coating composition comprising the present polyester resin and a curing agent.

### [EFFECT OF THE INVENTION]

The polyester resin according to the present invention comprises a unit derived from a biomass-derived anhydrosugar alcohol or a derivative thereof having improved reactivity, thus it can solve the problem of depletion of finite petroleum resources, is eco-friendly, has high heat resistance, and can remarkably improve the weatherability and flexibility of the coating film when used in powder coatings.

### [CONCRETE MODE FOR CARRYING OUT THE INVENTION]

The present invention is explained in more detail below.

The polyester resin according to the present invention comprises: a repeating unit comprising a unit derived from an anhydrosugar alcohol or a derivative thereof; and a repeating unit derived from a polybasic acid component.

The anhydrous alcohol is any substance obtained by removing one or more water molecules from a compound obtained by adding hydrogen to the reducing terminal group of a saccharide, generally called hydrogenated sugar or sugar alcohol.

In the present invention, as the anhydrous alcohol, dianhydrohexitol, which is a dehydrate of hexitol, can be preferably used, and more preferably, the anhydrous alcohol may be selected from the group consisting of isosorbide (1,6-dianhydroisorbitol), isomannide (1,6-dianhydromannitol), isoidede (1,6-dianhydroiditol) or mixtures thereof, and most preferably isosorbide may be used.

In the present invention, the repeating unit comprising a unit derived from an anhydrosugar alcohol or a derivative thereof may be a repeating unit derived from a diol component comprising an anhydrosugar alcohol-alkylene glycol as an adduct obtained by reacting a terminal hydroxyl group of anhydrosugar alcohol with an alkylene oxide; an oligomer block prepared from a monomer mixture comprising a biomass-derived diol comprising an anhydrosugar alcohol, and a biomass-derived dibasic acid; or a prepolymer block prepared from a monomer mixture comprising a diol component comprising an anhydrosugar alcohol, and a polybasic acid component.

In the present invention, the term "anhydrosugar alcohol-alkylene glycol" refers to an adduct obtained by reacting a terminal (e.g., both terminals) hydroxyl group of anhydrosugar alcohol with an alkylene oxide (e.g., C₁-C₄ alkylene oxide, more specifically ethylene oxide, propylene oxide or a mixture thereof), a compound in which hydrogen of a terminal (e.g., both terminals) hydroxyl group of anhydrosugar alcohol is substituted with a hydroxyalkyl group which is a ring-opened form of an alkylene oxide. For example, the result of addition of ethylene oxide to both terminal hydroxyl groups of isosorbide is as follows:

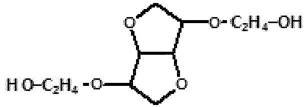

As is well known in the art, "biomass" means a biological organism such as a plant, a microorganism, a fungus, or an organism receiving solar energy, and the biomass raw material comprises, for example, plant-derived environmental recycling resources such as starch-based resources such as grains and potatoes, cellulosic resources such as herbaceous trees, timber, rice straw, and rice husks, and sugar resources such as sugar cane and sugar beet; and animal-derived environmental recycling resources such as manure and carcass of livestocks, and microbial cells, along with various organic wastes such as paper and food waste derived from these resources. In the present invention, expressions such as "biomass-derived" diol or dibasic acid are used to mean a diol or a dibasic acid obtained by physically, chemically and/or biologically treating such a biomass raw material.

Biomass-derived diols usable in the present invention may comprise anhydrosugar alcohol and bio-ethylene glycol (hereinafter, all biomass-derived materials are referred to in the same manner) which is ethylene glycol obtained from biomass raw materials, bio-diethylene glycol, bio-butylene glycol or a combination thereof, but they are not limited thereto.

Examples of the biomass-derived dibasic acid usable in the present invention comprise, but are not limited to, bio-succinic acid, bio-adipic acid or a combination thereof.

In the present invention, the diol component used in preparing the polyester resin may further comprise a diol compound other than anhydrosugar alcohol or an anhydrosugar alcohol-alkylene glycol, such as an aliphatic diol, an alicyclic diol, an aromatic diol or a combination thereof, and preferably an aliphatic diol. Also, some or all of these diol components may be biomass-derived diols, and the biomass-derived diols may comprise bio-ethylene glycol, bio-diethylene glycol, bio-butylene glycol or combinations thereof, together with an anhydrosugar alcohol.

The aliphatic diol, for example, may be a linear or branched aliphatic diol having 2 to 8 carbon atoms, and specifically, may be selected from the group consisting of ethylene glycol, diethylene glycol, triethylene glycol, 1,3-propanediol (propylene glycol), 1,2-propanediol, 1,4-butanediol (1,4-butylene glycol), 1,3-butanediol, 1,2-butanediol, 2,2-dimethyl-1,3-propanediol (neopentyl glycol), pentanediol (e.g., 1,5-pentanediol, 1,4-pentanediol, 1,3-pentanediol, 1,2-pentanediol, etc.), hexanediol (e.g., 1,6-hexanediol, 1,5-hexane diol, 1,4-hexanediol, 1,3-hexanediol, 1,2-hexanediol, etc.), heptanediol (e.g., 1,7-heptanediol, 1,6-heptanediol, 1,5-heptanediol, 1,4-heptanediol, 1,3-heptanediol, 1,2-heptanediol, etc.) or combinations thereof.

The alicyclic diol, for example, may be an alicyclic diol having 5 to 20 carbon atoms comprising 1 to 4 5-membered ring structures or 6-membered ring structures, and specifically, may be selected from the group consisting of 1,4-cyclohexanediol, 1,3-cyclohexanediol, 1,2-cyclohexanediol, 1,4-cyclohexanedimethanol, 1,3-cyclohexanedimethanol, 1,2-cyclohexanedimethanol, tetramethylcyclobutanediol, tricyclodecanedimethanol, adamantanediol or combinations thereof.

The aromatic diol, for example, may be an aromatic diol having 6 to 20 carbon atoms comprising 1 to 4 aromatic ring structures, and specifically, may be selected from the group consisting of bisphenol A, 4,4'-dihydroxy-diphenylsulfone, 4,4'-biphenol, hydroquinone, 4,4'-dihydroxy-diphenyl ether, 3-(4-hydroxyphenoxy)phenol, bis(4-hydroxyphenyl)sulfide or combinations thereof.

In the present invention, the diol component used in the preparation of the polyester resin may comprise, based on 100 mol% of the total diol component, 1 to 90 mol% of anhydrosugar alcohol or anhydrosugar alcohol-alkylene glycol, and 10 to 99 mol% of a diol compound other than anhydrosugar alcohol or anhydrosugar alcohol-alkylene glycol (for example, aliphatic diols, alicyclic diols and/or aromatic diols); or 5 to 80 mol% of anhydrosugar alcohol or anhydrosugar alcohol-alkylene glycol, and 20 to 95 mol% of a diol compound other than anhydrosugar alcohol or anhydrosugar alcohol-alkylene glycol; or 10 to 70 mol% of anhydrosugar alcohol or anhydrosugar alcohol-alkylene glycol, and 30 to 90 mol% of a diol compound other than anhydrosugar alcohol or anhydrosugar alcohol-alkylene glycol. If the content of the anhydrosugar alcohol or the anhydrosugar alcohol-alkylene glycol in the entire diol component is lower than the above-mentioned level, the reactivity is lowered in the preparation of the resin, the reaction time is prolonged, and properties such as color and heat resistance may be deteriorated. On the other hand, if the content is higher than the above-mentioned level, the glass transition temperature of the prepared resin is lowered such that the storage stability of the product is lowered and production of the product is not easy, and it may be difficult to apply powder coatings.

In the present invention, the polybasic acid component used in the preparation of the polyester resin may be a dibasic acid, a tribasic acid or a mixture thereof, and specifically, the dibasic acid may be selected from the group consisting of an aromatic dicarboxylic acid having 8 to 14 carbon atoms (e.g., terephthalic acid, isophthalic acid, naphthalenedicarboxylic acid, diphenyldicarboxylic acid, etc.), an aliphatic dicarboxylic acid having 4 to 12 carbon atoms (e.g., (1,4- or 1,3-) cyclohexanedicarboxylic acid, phthalic acid, sebacic acid, succinic acid, maleic acid, fumaric acid, adipic acid, glutaric acid, etc.) or combinations thereof; and the tribasic acid may be trimellitic acid or its anhydride. Some or all of the dibasic acid components may be biomass-derived dibasic acids such as bio-succinic acid, bio-adipic acid or a combination thereof.

In the present invention, in the case wherein the repeating unit comprising a unit derived from an anhydrosugar alcohol or a derivative thereof is: a repeating unit derived from a diol component comprising an anhydrosugar alcohol-alkylene glycol as an adduct obtained by reacting a terminal hydroxyl group of an anhydrosugar alcohol with an alkylene oxide; an oligomer block prepared from a monomer mixture comprising a biomass-derived diol comprising an anhydrosugar alcohol, and a biomass-derived dibasic acid; or a prepolymer block prepared from a monomer mixture comprising a diol component comprising an anhydrosugar alcohol, and a polybasic acid component, there is no particular limitation on the amount ratio of the diol component to the polybasic acid component used in the preparation of the polyester resin-for example, the amount of the polybasic acid component to be used may be 80 to 120 moles or 90 to 110 moles, based on 100 moles of the total diol component. If the amount of the polybasic acid component is lower than the above-mentioned level, the content of the curing agent may be lowered in the preparation of the powder coating, and the chemical resistance, impact resistance and hardness may be lowered. On the other hand, if the amount is higher than the above-mentioned level, there may be a problem in that the appearance and leveling of the coating film are lowered when the powder coating is applied.

In the present invention, in the case wherein the repeating unit comprising a unit derived from an anhydrosugar alcohol or a derivative thereof is a prepolymer block prepared from a monomer mixture comprising a diol component comprising an anhydrosugar alcohol, and a polybasic acid component, the amount of anhydrosugar alcohol as a repeating unit in the polyester resin may be preferably 1 to 15% by weight, more preferably 2 to 12% by weight, and even more preferably 3 to 10% by weight, based on 100% by weight of the total amount of the polyester resin. If the amount of the anhydrosugar alcohol in the polyester resin is higher than the above-mentioned level, the reactivity is lowered during the preparation of the resin, such that the reaction time becomes longer, and there may be a problem in that properties such as appearance, color, leveling and heat resistance are lowered. On the other hand, if the amount is less than the above-mentioned level, the glass transition temperature of the prepared resin is lowered, which lowers the storage stability of the product and makes production of the product difficult, and it may become difficult to apply the powder coating.

According to one embodiment of the present invention, the polyester resin may be prepared by a method comprising the steps of: (1) preparing a prepolymer by reacting a repeating unit comprising a unit derived from an anhydrosugar alcohol or a derivative thereof with a polybasic acid component; and (2) preparing a polyester resin by reacting the prepolymer prepared in step (1) with a polybasic acid component. The unit derived from anhydrosugar alcohol or a derivative thereof and the polybasic acid component are the same as previously described.

According to one embodiment of the present invention, in the case wherein the repeating unit comprising a unit derived from an anhydrosugar alcohol or a derivative thereof is a repeating unit derived from a diol component comprising an anhydrosugar alcohol-alkylene glycol as an adduct obtained by reacting a terminal hydroxyl group of an anhydrosugar alcohol with an alkylene oxide, the above step (1) may comprise the steps of: (1-1) preparing an anhydrosugar alcohol-alkylene glycol as an adduct by reacting an anhydrosugar alcohol with an alkylene oxide; and (1-2) preparing a prepolymer by reacting a diol component comprising the anhydrosugar alcohol-alkylene glycol prepared in step (1-1) with a polybasic acid component.

In step (1-1), the reaction of the anhydrosugar alcohol with the alkylene oxide may be conducted in a high-pressure reactor capable of pressurization (for example, pressurization of 3 MPa or more), in the presence of a catalyst-for example, in the presence of an acid catalyst (for example, a strong acid catalyst such as sulfuric acid or phosphoric acid) or a base catalyst (for example, a strong base catalyst such as sodium hydroxide), at elevated temperatures (e.g., 110 to 180°C, or 120 to 160°C)-for example, for from 1 hour to 8 hours or from 2 hours to 4 hours, but it is not limited thereto. The reaction molar ratio of the anhydrosugar alcohol to the alkylene oxide may be, for example, 2 to 20 moles, preferably 5 to 10 moles of the alkylene oxide per 1 mole of the anhydrosugar alcohol, but is not limited thereto.

In step (1-2), the reaction of the diol component comprising the anhydrosugar alcohol-alkylene glycol with a polybasic acid component (preferably a dibasic acid component) may be conducted in the presence of a catalyst-for example, an organic tin catalyst (for example, monobutyl tin oxide), an organic titanium catalyst (for example, tetra-n-butyl titanate) or a strong acid catalyst, at elevated temperatures (e.g., 200 to 280°C, or 240 to 250°C), but it is not limited thereto. The prepolymer obtained in step (1-2) may have, for example, a hydroxy value of 30 to 40 mgKOH/g, an acid value of 1 to 10 mgKOH/g, a viscosity of 4,000 to 6,000 cPs (Brookfield viscosity at 175°C) and a number average molecular weight of 1,500 to 2,500, but it is not limited thereto.

In step (2), the reaction of the prepolymer with a polybasic acid component (preferably a tribasic acid, or a mixture of tribasic and dibasic acids) may be conducted, optionally in the presence of a catalyst (for example, a tin catalyst such as monobutyl tin oxide), at elevated temperatures (e.g., 165 to 215°C, or 175 to 205°C), but it is not limited thereto. The polyester resin obtained in step (2) may have, for example, an acid value of 40 to 60 mg KOH/g, a viscosity of 2,000 to 6,000 cPs, preferably 2,000 to 4,000 cPs, more preferably 3,000 to 4,000 cPs (Brookfield viscosity at 200°C), a glass transition temperature of 55 to 100°C, preferably 55 to 70°C, more preferably 55 to 65°C, and a number average molecular weight of 3,000 to 5,000, preferably 3,500 to 4,500, but is not limited thereto.

According to one embodiment of the present invention, in the case wherein the repeating unit comprising a unit derived from an anhydrosugar alcohol or a derivative thereof is an oligomer block prepared from a monomer mixture comprising a biomass-derived diol comprising an anhydrosugar alcohol and a biomass-derived dibasic acid, the above step (1) may comprise the steps of: (1-1) preparing an anhydrosugar alcohol-containing oligomer by reacting a monomer mixture comprising a biomass-derived diol containing an anhydrosugar alcohol and a biomass-derived dibasic acid; and (1-2) preparing a prepolymer by reacting a diol component comprising the anhydrosugar alcohol-containing oligomer in step (1-1) with a polybasic acid component.

In the above step (1-1), the reaction of the monomer mixture comprising a biomass-derived diol comprising an anhydrosugar alcohol and a biomass-derived dibasic acid may be conducted in the presence of a catalyst-for example, an organic tin catalyst (for example, monobutyl tin oxide), an organic titanium catalyst (for example, tetra-n-butyl titanate) or a strong acid catalyst, at elevated temperatures (e.g., 110 to 280°C, or 120 to 250°C), but it is not limited thereto. The anhydrosugar alcohol-containing oligomer obtained in the step (1-1) may have, for example, a hydroxy value of 150 to 250 mgKOH/g, an acid value of 1 to 10 mgKOH/g and a number average molecular weight of 500 to 1,500, but it is not limited thereto.

In the above step (1-2), the reaction of a diol component comprising the anhydrosugar alcohol-containing oligomer with a polybasic acid component (preferably dibasic acid component) may be conducted in the presence of a catalyst-for example, an organic tin catalyst (for example, monobutyl tin oxide), an organic titanium catalyst (for example, tetra-n-butyl titanate) or a strong acid catalyst, at elevated temperatures (e.g., 110 to 280°C, or 120 to 250°C), but it is not limited thereto. The prepolymer obtained in step (1-2) may have, for example, a hydroxy value of 30 to 60 mgKOH/g, an acid value of 1 to 15 mgKOH/g, a viscosity of 4,000 to 6,000 cPs (Brookfield viscosity at 175°C) and a number average molecular weight of 1,500 to 2,700, but it is not limited thereto.

In step (2), the reaction of the prepolymer with a polybasic acid component (preferably a tribasic acid, or a mixture of tribasic and dibasic acids) may be conducted, optionally in the presence of a catalyst (for example, a tin catalyst such as monobutyl tin oxide), at elevated temperatures (e.g., 165 to 215°C, or 175 to 205°C), but it is not limited thereto. The polyester resin obtained in step (2) may have, for example, an acid value of 40 to 60 mg KOH/g, a viscosity of 2,000 to 6,000 cPs, preferably 2,000 to 4,000 cPs, more preferably 3,000 to 4,000 cPs (Brookfield viscosity at 200°C), a glass transition temperature of 55 to 100°C, preferably 55 to 70°C, more preferably 55 to 65°C, and a number average molecular weight of 3,000 to 5,000, preferably 3,500 to 4,500, but it is not limited thereto.

According to one embodiment of the present invention, in the case wherein the repeating unit comprising a unit derived from an anhydrosugar alcohol or a derivative thereof is a prepolymer block prepared from a monomer mixture comprising a diol component comprising an anhydrosugar alcohol, and a polybasic acid component, step (1) may be a step of preparing a prepolymer by reacting a diol component comprising an anhydrosugar alcohol with a polybasic acid component.

In the above step (1), the reaction of the diol component comprising an anhydrosugar alcohol with a polybasic acid component (preferably a dibasic component) may be conducted in the presence of a catalyst-for example, an organic tin catalyst (for example, monobutyl tin oxide), an organic titanium catalyst (for example, tetra-n-butyl titanate) or a strong acid catalyst, at elevated temperatures (e.g., 110 to 280°C, or 120 to 250°C), but it is not limited thereto. The prepolymer obtained in step (1) may have, for example, a hydroxy value of 30 to 60 mgKOH/g, an acid value of 1 to 15 mgKOH/g, a viscosity of 4,000 to 6,000 cPs (Brookfield viscosity at 175°C) and a number average molecular weight of 1,500 to 2,700, but it is not limited thereto.

In step (2), the reaction of the prepolymer with a polybasic acid component (preferably a tribasic acid or a mixture of tribasic and dibasic acids) may be conducted, optionally in the presence of a catalyst (for example, a tin catalyst such as monobutyl tin oxide), at elevated temperatures (e.g., 165 to 230°C, or 175 to 230°C), but it is not limited thereto. The polyester resin obtained in step (2) may have, for example, an acid value of 40 to 60 mg KOH/g, a viscosity of 2,000 to 6,000 cPs, preferably 2,000 to 4,000 cPs, more preferably 3,000 to 4,000 cPs (Brookfield viscosity at 200°C), a glass transition temperature of 55 to 100°C, preferably 55 to 70°C, more preferably 55 to 65°C, and a number average molecular weight of 3,000 to 5,000, preferably 3,500 to 4,500, but it is not limited thereto.

In addition, when a polyester resin is cured with an epoxy-based curing agent, an additive for increasing the reaction rate such as ethyltriphenylphosphonium bromide may be further used in step (2).

The polyester resin of the present invention as described above can remarkably improve the weatherability and flexibility of a coating film when used in powder coatings.

Therefore, in another aspect of the present invention, the present invention provides a powder coating composition comprising the present polyester resin and a curing agent.

As the curing agent, a curing agent generally used in the powder coating composition may be used without limitation. For example, an epoxy based curing agent may be used, and as the epoxy based curing agent, those prepared by reacting a phenol compound (e.g., bisphenol A, bisphenol F or a mixture thereof) with an epoxy resin may be used, but it is not limited thereto.

There is no particular limitation on the amount of the polyester resin and the curing agent comprised in the powder coating composition of the present invention. For example, 40 to 80 parts by weight of a polyester resin and 20 to 60 parts by weight of a curing agent or 50 to 70 parts by weight of a polyester resin and 30 to 50 parts by weight of a curing agent may be comprised in the powder coating composition, based on 100 parts by weight of the total of the polyester resin and the curing agent, but it is not limited thereto.

The powder coating composition of the present invention may further comprise one or more additives usually used in powder coating compositions. As the additives, for example, one or more selected from a pinhole inhibitor (e.g., benzoin), a flow improver, a wax component (e.g., polyethylene wax), a white pigment (e.g., titanium dioxide) or an extender pigment (for example, barium sulfate) may be used, but they are not limited thereto.

The present invention is explained in more detail through the following Examples and Comparative Examples. However, the scope of the present invention is not limited thereby in any manner.

### [EXAMPLES]

### I. In the case wherein the repeating unit comprising a unit derived from an anhydrosugar alcohol or a derivative thereof is: a repeating unit derived from a diol component comprising an anhydrosugar alcohol-alkylene glycol as an adduct obtained by reacting a terminal hydroxyl group of an anhydrosugar alcohol with an alkylene oxide

### Preparation of polyester resin

### [Example 1-1-1]

### Step 1-1: Preparation of isosorbide-ethylene glygol

73.1 g of isosorbide, 110 g of ethylene oxide and 0.2 g of sodium hydroxide as a catalyst were added in a reactor capable of pressurization, equipped with a column having a nitrogen gas pipe and a cooling device, a stirrer, a thermometer and a heater, and the mixture was slowly heated. The reaction was conducted while maintaining the temperature at 120 to 160°C for 2 to 4 hours to prepare isosorbide-ethylene glycol having a form in which the hydrogens of the hydroxyl group at both ends of the isosorbide were substituted with hydroxyethyl groups.

### Step 1-2: Preparation of a prepolymer

664.8 g of terephthalic acid, 43.55 g of cyclohexanedicarboxylic acid, 36.55 g of adipic acid, 468.9 g of neopentyl glycol, 24.8 g of ethylene glycol, 22.55 g of 1,4-butylene glycol, 210 g of the isosorbide-ethylene glycol prepared in the above step 1-1 and 3.2 g of monobutyl tin oxide (BT-300, SONGSTAB) as a catalyst were added in a five-necked flask equipped with a column having a nitrogen gas pipe and a cooling device, a stirrer, a thermometer and a heater, and the mixture was slowly heated. When the temperature of the mixture reached 120 to 160°C, the condensed water was drained. And from this time, the reaction mixture was reacted at an elevated temperature of about 240 to 250°C while checking the glycol in the condensed water, and then 1.3 g of tributylphosphite was added thereto to obtain a prepolymer having a hydroxy value of 33 mgKOH/g, an acid value of 4 mgKOH/g, a viscosity of 5,000 cPs (Brookfield viscosity at 175°C) and a number average molecular weight of 2,000.

### Step 2: Preparation of a polyester resin

1,200 g of the prepolymer prepared in step 1-2, 130.6 g of trimellitic anhydride and 20.7 g of adipic acid were added in a five-necked flask equipped with a column having a nitrogen gas pipe and a cooling device, a stirrer, a thermometer and a heater, and the mixture was heated at 165 to 215°C. Then, the reactant was maintained at a temperature of 175 to 205°C and reacted while removing the condensed water. Finally, in order to increase the degree of polymerization of the polyester resin, nitrogen excess or reduced pressure (50 to 200 mmHg) was used to remove unextracted condensed water and unreacted materials in the polyester resin, and then 4.9 g of ethyltriphenylphosphonium bromide was added thereto to prepare a polyester resin having desired properties. The prepared polyester resin had an acid value of 53 mg KOH/g, a viscosity of 3,400 cPs (Brookfield viscosity at 200°C), a glass transition temperature of 59°C and a number average molecular weight of 3,500.

### [Example 1-2-1]

Excepting that the amount of adipic acid was changed from 35.55 g to 24.3 g and the amount of ethylene glycol was changed from 24.8 g to 16.8 g, the amount of 1,4-butylene glycol was changed from 22.5 g to 18.9 g, the amount of isosorbide-ethylene glycol was changed from 210 g to 260 g in the step of preparation of the prepolymer, and the amount of trimellitic anhydride was changed from 130.6 g to 145.8 g and the amount of adipic acid was changed from 20.7 g to 0 g in the step of preparation of the polyester resin, a polyester resin was prepared by the same method as in Example 1-1-1. The resulting final polyester resin had an acid value of 51 mgKOH/g, a viscosity of 3,100 cPs (Brookfield viscosity at 200°C), a glass transition temperature of 60°C and a number average molecular weight of 3,800.

### [Example 1-3-1]

### Step 1-1: Preparation of isosorbide-propylene glygol

73.1 g of isosorbide, 145 g of propylene oxide and 0.2 g of sodium hydroxide as a catalyst were added in a reactor capable of pressurization, equipped with a column having a nitrogen gas pipe and a cooling device, a stirrer, a thermometer and a heater, and the mixture was slowly heated. The reaction was conducted while maintaining the temperature at 120 to 160°C for 2 to 4 hours to prepare isosorbide-propylene glycol having a form in which the hydrogens of the hydroxyl group at both ends of the isosorbide were substituted with hydroxypropyl groups.

### Step 1-2: Preparation of a prepolymer

664.8 g of terephthalic acid, 43.55 g of cyclohexanedicarboxylic acid, 36.55 g of adipic acid, 468.9 g of neopentyl glycol, 24.8 g of ethylene glycol, 22.55 g of 1,4-butylene glycol, 210 g of the isosorbide-propylene glycol prepared in the above step 1-1 and 3.2 g of monobutyl tin oxide (BT-300, SONGSTAB) as a catalyst were added in a five-necked flask equipped with a column having a nitrogen gas pipe and a cooling device, a stirrer, a thermometer and a heater, and the mixture was slowly heated. When the temperature of the mixture reached 120 to 160°C, the condensed water was drained. And from this time, the reaction mixture was reacted at an elevated temperature of about 240 to 250°C while checking the glycol in the condensed water, and then 1.3 g of tributylphosphite was added thereto to obtain a prepolymer having a hydroxy value of 33 mgKOH/g, an acid value of 4 mgKOH/g, a viscosity of 5,000 cPs (Brookfield viscosity at 175°C) and a number average molecular weight of 2,000.

### Step 2: Preparation of a polyester resin

1,200 g of the prepolymer prepared in the above step 1-2, 130.6 g of trimellitic anhydride and 20.7 g of adipic acid were added in a five-necked flask equipped with a column having a nitrogen gas pipe and a cooling device, a stirrer, a thermometer and a heater, and the mixture was heated at 165 to 215°C. Then, the reactant was maintained at the temperature of 175 to 205°C and reacted while removing the condensed water. Finally, in order to increase the degree of polymerization of the polyester resin, nitrogen excess or reduced pressure (50 to 200 mmHg) was used to remove unextracted condensed water and unreacted materials in the polyester resin, and then 4.9 g of ethyltriphenylphosphonium bromide was added thereto to prepare a polyester resin having desired properties. The prepared polyester resin had an acid value of 52 mg KOH/g, a viscosity of 3,300 cPs (Brookfield viscosity at 200°C), a glass transition temperature of 58°C and a number average molecular weight of 3,600.

### [Example 1-4-1]

Excepting that the amount of adipic acid was changed from 35.55 g to 24.3 g and the amount of ethylene glycol was changed from 24.8 g to 16.8 g, the amount of 1,4-butylene glycol was changed from 22.5 g to 18.9 g, the amount of isosorbide-propylene glycol was changed from 210 g to 260 g in the step of preparation of the prepolymer, and the amount of trimellitic anhydride was changed from 130.6 g to 145.8 g and the amount of adipic acid was changed from 20.7 g to 0 g in the step of preparation of the polyester resin, a polyester resin was prepared by the same method as in Example 1-3-1. The resulting final polyester resin had an acid value of 50 mgKOH/g, a viscosity of 3,000 cPs (Brookfield viscosity at 200°C), a glass transition temperature of 59°C and a number average molecular weight of 3,900.

### [Comparative Example 1-1-1]

### Step 1: Preparation of a prepolymer

831 g of terephthalic acid, 16.62 g of isophthalic acid, 26.13 g of cyclohexanedicarboxylic acid, 84.62 g of adipic acid, 521.0 g of neopentyl glycol, 31 g of ethylene glycol, 22.55 g of 1,4-butylene glycol and 2.8 g of monobutyl tin oxide (BT-300, SONGSTAB) as a catalyst were added in a five-necked flask equipped with a column having a nitrogen gas pipe and a cooling device, a stirrer, a thermometer and a heater, and the mixture was slowly heated. When the temperature of the mixture reached 120 to 160°C, the condensed water was drained. And from this time, the reaction mixture was reacted at an elevated temperature of about 240 to 250°C while checking the glycol in the condensed water to obtain a prepolymer having a hydroxy value of 40 mgKOH/g, an acid value of 5 mgKOH/g and a number average molecular weight of 2,000.

### Step 2: Preparation of a polyester resin

1,200 g of the prepolymer prepared in the above step 1, 129.6 g of trimellitic anhydride and 30.6 g of adipic acid were added in a five-necked flask equipped with a column having a nitrogen gas pipe and a cooling device, a stirrer, a thermometer and a heater, and the mixture was heated at 165 to 215°C. Then, the reactant was maintained at the temperature of 175 to 205°C and reacted while removing the condensed water.

Finally, in order to increase the degree of polymerization of the polyester resin, nitrogen excess or reduced pressure (50 to 200 mmHg) was used to remove unextracted condensed water and unreacted materials in the polyester resin, and then 5.6 g of ethyltriphenylphosphonium bromide was added thereto to obtain a polyester resin. The resulting final polyester resin had an acid value of 53 mg KOH/g, a viscosity of 3,500 cPs (Brookfield viscosity at 200°C), a glass transition temperature of 54°C and a number average molecular weight of 2,800.

### [Comparative Example 1-2-1]

Excepting that the amount of terephthalic acid was changed from 831 g to 847.6 g, the amount of isophthalic acid was changed from 16.62 g to 0 g, the amount of adipic acid was changed from 84.62 g to 83.93 g, the amount of neopentyl glycol was changed from 521 g to 547 g, the amount of ethylene glycol was changed from 31 g to 15.5 g, and the amount of 1,4-butylene glycol was changed from 22.55 g to 18.9 g in the step of preparation of the prepolymer, and the amount of trimellitic anhydride was changed from 129.6 g to 146.3 g and the amount of adipic acid was changed from 30.6 g to 0 g in the step of preparation of the polyester resin, a polyester resin was prepared by the same method as in Comparative Example 1-1-1. The resulting final polyester resin had an acid value of 52 mgKOH/g, a viscosity of 3,600 cPs (Brookfield viscosity at 200°C), a glass transition temperature of 53°C and a number average molecular weight of 2,700.

### [Comparative Example 1-3-1]

Excepting that the amount of terephthalic acid was changed from 831 g to 847.6 g, the amount of adipic acid was changed from 84.62 g to 79.6 g and the amount of ethylene glycol was changed from 31 g to 0 g in the step of preparation of the prepolymer, and the amount of trimellitic anhydride was changed from 129.6 g to 136.5 g and the amount of adipic acid was changed from 30.6 g to 18.7 g in the step of preparation of the polyester resin, a polyester resin was prepared by the same method as in Comparative Example 1-1-1. The resulting final polyester resin had an acid value of 54 mgKOH/g, a viscosity of 3,300 cPs (Brookfield viscosity at 200°C), a glass transition temperature of 52°C and a number average molecular weight of 2,600.

The amounts of reactants used in Examples 1-1-1 to 1-4-1 and Comparative Examples 1-1-1 to 1-3-1 and the properties of the prepared polyester resin are shown in Table 1 below.

**[Table 1]**

| Component | | | Examples | | | | Comparative Examples | | |
|---|---|---|---|---|---|---|---|---|---|
| | | | 1-1-1 | 1-2-1 | 1-3-1 | 1-4-1 | 1-1-1 | 1-2-1 | 1-3-1 |
| Preparation of a prepolymer | 1 | Terephthalic acid (g) | 664.8 | 664.8 | 664.8 | 664.8 | 831.0 | 847.6 | 847.6 |
| | 2 | Isophthalic acid (g) | - | - | - | - | 16.62 | - | 16.62 |
| | 3 | Cyclohexanedicarboxylic acid (g) | 43.55 | 43.55 | 43.55 | 43.55 | 26.13 | 26.13 | 26.13 |
| | 4 | Adipic acid (g) | 36.55 | 24.3 | 36.55 | 24.3 | 84.62 | 83.93 | 79.6 |
| | 5 | Neopentyl glycol (g) | 468.9 | 468.9 | 468.9 | 468.9 | 521.0 | 547.0 | 521.0 |
| | 6 | Ethylene glycol (g) | 24.8 | 16.8 | 24.8 | 16.8 | 31.0 | 15.5 | |
| | 7 | 1,4-butylene glycol (g) | 22.55 | 18.9 | 22.55 | 18.9 | 22.55 | 18.9 | 22.55 |
| | 8 | Isosorbide-ethylene glycol (g) | 210 | 260 | - | - | - | - | - |
| | 9 | Isosorbide-propylene glygol (g) | - | - | 210 | 260 | - | - | - |
| Preparation of a polyester resin | 1 | Prepolymer (g) | 1,200 | 1,200 | 1,200 | 1,200 | 1,200 | 1,200 | 1,200 |
| | 2 | Trimellitic anhydride (g) | 130.6 | 145.8 | 130.6 | 145.8 | 129.6 | 146.3 | 136.5 |
| | 3 | Adipic acid (g) | 20.7 | - | 20.7 | - | 30.6 | - | 18.7 |
| | 4 | ETPBr¹ (g) | 4.9 | 4.9 | 4.9 | 4.9 | 5.6 | 5.6 | 5.6 |
| Properties | Acid value² (mg KOH/g) | | 53 | 51 | 52 | 50 | 53 | 52 | 54 |
| | Viscosity³ (cPs) | | 3,400 | 3,100 | 3,300 | 3,000 | 3,500 | 3,600 | 3,300 |
| | Number average molecular weight⁴ (g/mol) | | 3,500 | 3,800 | 3,600 | 3,900 | 2,800 | 2,700 | 2,600 |
| | Glass transition temperature⁵ (°C) | | 59 | 60 | 58 | 59 | 54 | 53 | 52 |

| | | | | | | | | | |
|---|---|---|---|---|---|---|---|---|---|
| 1: Ethyltriphenylphosphonium bromide: additive that increases the reaction rate when a polyester resin is cured with an epoxy-based curing agent 2: The acid value was measured using a 0.1N-KOH methanol solution. 3: Viscosities were measured at 200°C using a Brookfield viscometer (Brookfield CAP2000 + Viscosmeter). 4: The number average molecular weight was measured by gel permeation chromatography (GPC) analysis. 5: The glass transition temperature was measured using a differential scanning calorimeter (DSC). | | | | | | | | | |

### Preparation of powder coatings

### [Example 1-1-2]

60 parts by weight of the polyester resin prepared in Example 1-1-1, 40 parts by weight of an epoxy resin (YD-013K, equivalent weight 800, Kukdo Chemical) as a curing agent, 0.5 parts by weight of a pinhole inhibitor (Benzoin, Samchun), 1.5 parts by weight of a flow improver (PV-5, Worlee), 0.5 part by weight of polyethylene wax (PE 1544), 50 parts by weight of titanium dioxide (R-902+, Dupont-Titan Co.) as a white pigment and 10 parts by weight of barium sulfate (BSN-OF, Gemme) as an extender pigment were uniformly mixed and pulverized. Then, the powder was dispersed through a high-temperature extruder, and the solidified particles were again pulverized through a mixer, and a powder coating having a particle size of 120 µm m or less was prepared through sieving.

### [Examples 1-2-2, 1-3-2 and 1-4-2 and Comparative Examples 1-1-2, 1-2-2 and 1-3-2]

Excepting that the polyester resin was changed to the polyester resin prepared from Examples 1-2-1, 1-3-1 and 1-4-1, and Comparative Examples 1-1-1, 1-2-1 and 1-3-1, respectively, powder coatings were prepared by the same method as in Example 1-1-2.

The composition ratio by weight of the components of the powder coatings of Examples 1-1-2 to 1-4-2 and Comparative Examples 1-1-2 to 1-3-2 is shown in Table 2 below.

**[Table 2]**

| Component | Examples | | | | Comparative Examples | | |
|---|---|---|---|---|---|---|---|
| | 1-1-2 | 1-2-2 | 1-3-2 | 1-4-2 | 1-1-2 | 1-2-2 | 1-3-2 |
| Polyester resin | 60 | 60 | 60 | 60 | 60 | 60 | 60 |
| YD-013K | 40 | 40 | 40 | 40 | 40 | 40 | 40 |
| Benzoin | 0.5 | 0.5 | 0.5 | 0.5 | 0.5 | 0.5 | 0.5 |
| PV-5 | 1.5 | 1.5 | 1.5 | 1.5 | 1.5 | 1.5 | 1.5 |
| PE 1544 | 0.5 | 0.5 | 0.5 | 0.5 | 0.5 | 0.5 | 0.5 |
| Titanium dioxide | 50 | 50 | 50 | 50 | 50 | 50 | 50 |
| Barium sulfate | 10 | 10 | 10 | 10 | 10 | 10 | 10 |

### Preparation of coating film specimens

### [Example 1-1-3]

The powder coating prepared in Example 1-1-2 was applied to a 0.6-mm thick cold rolled sheet pretreated with zinc phosphate and cured under curing condition at 160°C for 15 minutes and at 170°C for 10 minutes to obtain a coating film specimen having a thickness of 90 ± 10 µm.

### [Examples 1-2-3, 1-3-3 and 1-4-3 and Comparative Examples 1-1-3, 1-2-3 and 1-3-3]

Excepting that the powder coating was changed to the powder coating prepared from Examples 1-2-2, 1-3-2 and 1-4-2, and Comparative Examples 1-1-2, 1-2-2 and 1-3-2, respectively, coating film specimens were prepared by the same method as in Example 1-1-3.

The properties of the prepared coating film specimens were measured by the following methods.

### <Leveling evaluation method>

The coating film specimen was visually observed, and the lower curvature of the specimen to be visually observed indicates better leveling.

### <Pinhole evaluation method>

The film specimen was visually observed, and the visually observed pinholes were measured using a thickness gauge. The larger pinhole thickness indicates excellence.

### <Gloss evaluation method>

According to KSM ISO 2813, the gloss level of the coating was measured using a gloss meter. The higher values indicate more excellent gloss.

### <Adhesiveness evaluation method>

According to KSM ISO 2409, 100 grooves were formed at a distance of 1 mm × 1 mm on the coating film specimen with a constant force and attached with glass tape. After a certain time, the glass tape was peeled off and the number of remaining pieces attached to coating film specimen was measured.

### <Flexibility evaluation method>

According to ASTM E 643-09, a constant force was applied to the pin axis on the opposite side of the coating specimen using an Erichsen instrument to determine the depth of penetration (mm) just before the crack occurred. The higher values indicate better flexibility.

### <Bending test method>

According to KSM ISO 6860, when 3/8 inch of a coating film specimen was folded by using a bending device, it was visually confirmed whether or not a crack occurred in the coating film specimen.

○: When no crack occurred
×: When a crack occurred

### <Impact evaluation method>

According to KSM ISO 6272-1, a weight of 1 kg was dropped from a fixed stand of 50 cm and 20 cm height to visually check whether a crack occurred in the coating film specimen. The higher drop height capable of producing crack indicates better impact resistance.

### <Fouling resistance evaluation method >

As a fouling resistance test using a marker pen as a contaminant, the marker pen was drawn with constant force on the coating film specimen. After 24 hours, the extent to which the mark was erased was visually confirmed using a soft cloth moistened with alcohol. The higher value indicates the better erosion of the mark as a contaminant and the better fouling resistance.

### <Solvent resistance evaluation method>

After the coating film specimen was settled in xylene solvent for 24 hours, the level of peeling and luster of the coating film over time was checked.

### <Alkali resistance evaluation method>

According to ASTM D 1308-2, the coating film specimen was settled in a 5% NaOH solvent for 72 hours, and after a lapse of a certain time, the peeling and glossiness of the coating film were checked.

### <QUV test>

According to ASTM G 53-88, ultraviolet rays (UV-B313) were irradiated on the coating film specimens for a predetermined period of time and cycles using a QUV instrument, and then the gloss and color difference were checked. The higher gloss value indicates better weatherability, and the lower color difference value indicates better weatherability.

### <Storage stability evaluation method>

The powder coating was stored for 6 hours in a high-temperature environment of 40°C, and the level of agglomeration or aggregation of the powder coating material was visually checked. The smaller agglomeration or aggregation of the powder coating indicates better storage stability.

⊚: Almost no agglomeration or aggregation of powder coating
○: A little agglomeration or aggregation of powder coating
×: A lot of agglomeration or aggregation of powder coating
The properties of the measured coating film specimens are shown in Table 3 below.

**[Table 3]**

| | | Examples | | | | Comparative Examples | | |
|---|---|---|---|---|---|---|---|---|
| | | 1-1-3 | 1-2-3 | 1-3-3 | 1-4-3 | 1-1-3 | 1-2-3 | 1-3-3 |
| Appearance | Leveling | Good | Good | Good | Good | Good | Good | Good |
| | Pinhole | Good | Good | Good | Good | Good | Good | Good |
| | Gloss | 93% | 94% | 94% | 93% | 88% | 87% | 85% |
| Mechanical properties | Adhesiveness | 100/100 | 100/100 | 100/100 | 100/100 | 100/100 | 100/100 | 100/100 |
| | Flexibility | 8 mm | 9 mm | 8 mm | 9 mm | 5 mm | 6 mm | 4 mm |
| | Bending | ○ | ○ | ○ | ○ | × | × | × |
| | Impact | 1 kg/50 | 1 kg/50 | 1 kg/50 | 1 kg/50 | 1 kg/20 | 1 kg/20 | 1 kg/20 |
| Chemical resistance | Fouling resistance | 9 | 9 | 8+ | 8+ | 7 | 7 | 7 |
| | Solvent resistance | No gloss drop | No gloss drop | No gloss drop | No gloss drop | Slightly lowered gloss | Slightly lowered gloss | Slightly lowered gloss |
| | Alkali resistance | No problem | No problem | No problem | No problem | No problem | No problem | No problem |
| QUV (100 hours) | Gloss | 64% | 66% | 63% | 66% | 45% | 43% | 46% |
| | Color difference | 3.48 | 3.41 | 3.42 | 3.36 | 4.71 | 4.80 | 4.64 |
| Storage stability | | ⊚ | ⊚ | ⊚ | ⊚ | ○ | ○ | ○ |

As shown in Table 3, powder coating was prepared by using the polyester resins prepared in Examples 1-1-1 to 1-4-1 and Comparative Examples 1-1-1 to 1-3-1, respectively, and the properties of the coating film specimens prepared by curing the powder coating under the same curing conditions were compared. As a result, leveling, pinholes and gloss were all good in appearance.

In terms of mechanical properties, Examples 1-1-3 to 1-4-3 according to the present invention had excellent flexibility of 7 mm or more and excellent bending, while Comparative Examples 1-1-3 and 1-3-3 had poor flexibility of 4 to 5 mm, respectively, and the bending was also poor.

In terms of chemical resistance, the coating film specimens of Examples 1-1-3 to 1-4-3 had a fouling resistance about 2 to 3 higher than the coating film specimens of Comparative Examples 1-1-3 to 1-3-3, there was a slight difference in solvent resistance and all of the alkali resistance was good.

In terms of QUV test, the gloss of the coating film specimens of Examples 1-1-3 to 1-4-3 according to the present invention was good at 63 to 66%, while the coating film specimens of Comparative Examples 1-1-3 to 1-3-3 was poor at 50% or less. In terms of color difference, the color difference of the coating film specimens of Examples 1-1-3 to 1-4-3 according to the present invention was lower than that of the coating film specimens of Comparative Examples 1-1-3 to 1-3-3, and thus had the better weatherability.

In terms of storage stability, the coating film specimens of Examples 1-1-3 to 1-4-3 according to the present invention were also superior to the coating film specimens of Comparative Examples 1-1-3 to 1-3-3.

### II. In the case wherein the repeating unit comprising a unit derived from an anhydrosugar alcohol or a derivative thereof is: an oligomer block prepared from a monomer mixture comprising a biomass-derived diol comprising an anhydrosugar alcohol, and a biomass-derived dibasic acid

### Preparation of polyester resin

### [Example 2-1-1]

### Step 1-1: Preparation of an isosorbide-containing oligomer

664.8 g of terephthalic acid, 118.2 g of bio-succinic acid, 731 g of isosorbide (ISB), 108.5 g of bio-ethylene glycol, 186 g of bio-diethylene glycol, 158 g of 1,4-butylene glycol and 1.97 g of monobutyl tin oxide (BT-300, SONGSTAB, Songwon Industrial Co., Ltd.) as a catalyst were added in a five-necked flask equipped with a column having a nitrogen gas pipe and a cooling device, a stirrer, a thermometer and a heater, and the mixture was slowly heated. When the temperature of the mixture reached 120 to 160°C, the condensed water was drained. And from this time, the reaction mixture was reacted at an elevated temperature of about 240 to 250°C while checking the glycol in the condensed water, and then 1.3 g of tributylphosphite was added thereto to obtain an ISB-containing oligomer having a hydroxy value of 200 mgKOH/g, an acid value of 4 mgKOH/g or less and a number average molecular weight of 900.

### Step 1-2: Preparation of a prepolymer

747.9 g of terephthalic acid, 24.93 g of isophthalic acid, 36.55 g of adipic acid, 59.1 g of bio-succinic acid, 364.7 g of neopentyl glycol, 46.5 g of bio-ethylene glycol, 67.65 g of bio-butylene glycol, 420.5 g of the ISB-containing oligomer prepared in the above step 1-1 and 3.53 g of monobutyl tin oxide (BT-300, SONGSTAB) as a catalyst were added in a five-necked flask equipped with a column having a nitrogen gas pipe and a cooling device, a stirrer, a thermometer and a heater, and the mixture was slowly heated. When the temperature of the mixture reached 120 to 160°C, the condensed water was drained. And from this time, the reaction mixture was reacted at an elevated temperature of about 240 to 250°C while checking the glycol in the condensed water, and then 1.3 g of tributylphosphite was added thereto to obtain a prepolymer having a hydroxy value of 36 mgKOH/g, an acid value of 5 mgKOH/g, a viscosity of 5,500 cPs (Brookfield viscosity at 175°C) and a number average molecular weight of 2,200.

### Step 2: Preparation of a polyester resin

1,200 g of the prepolymer prepared in the above step 1-2, 131.8 g of trimellitic anhydride and 25.6 g of adipic acid were added in a five-necked flask equipped with a column having a nitrogen gas pipe and a cooling device, a stirrer, a thermometer and a heater, and the mixture was heated at 165 to 215°C. Then, the reactant was maintained at the temperature of 175 to 205°C and reacted while removing the condensed water. Finally, in order to increase the degree of polymerization of the polyester resin, nitrogen excess or reduced pressure (50 to 200 mmHg) was used to remove unextracted condensed water and unreacted materials in the polyester resin, and then 5.7 g of ethyltriphenylphosphonium bromide was added thereto to prepare a polyester resin having desired properties. The resulting final polyester resin had an acid value of 53 mgKOH/g, a viscosity of 3,300 cPs (Brookfield viscosity at 200°C), a glass transition temperature of 59°C and a number average molecular weight of 3,600.

### [Example 2-2-1]

Excepting that 1) the amount of isophthalic acid was changed from 24.93 g to 16.62 g, the amount of adipic acid was changed from 35.55 g to 24.3 g, the amount of neopentyl glycol was changed from 364.7 g to 468.9 g, the amount of bio-butylene glycol was changed from 67.5 g to 45.1 g, and the amount of the ISB-containing oligomer was changed from 420.5 g to 350.5 g in the step of preparation of the prepolymer; and 2) the amount of trimellitic anhydride was changed from 131.8 g to 147.9 g, the amount of adipic acid was changed from 25.6 g to 0 g, and the amount of ethyltriphenylphosphonium bromide was changed from 5.7 g to 5.9 g in the step of preparation of the polyester resin, a polyester resin was prepared by the same method as in Example 2-1-1. The resulting final polyester resin had an acid value of 54 mgKOH/g, a viscosity of 3,100 cPs (Brookfield viscosity at 200°C), a glass transition temperature of 60°C and a number average molecular weight of 3,800.

### [Example 2-3-1]

### Step 1-1: Preparation of an isosorbide-containing oligomer

664.8 g of terephthalic acid, 118.2 g of bio-succinic acid, 731 g of isosorbide, 108.5 g of bio-ethylene glycol, 186 g of bio-diethylene glycol, 158 g of 1,4-butylene glycol and 1.97 g of monobutyl tin oxide (BT-300, SONGSTAB) as a catalyst were added in a five-necked flask equipped with a column having a nitrogen gas pipe and a cooling device, a stirrer, a thermometer and a heater, and the mixture was slowly heated. When the temperature of the mixture reached 120 to 160°C, the condensed water was drained. And from this time, the reaction mixture was reacted at an elevated temperature of about 240 to 250°C while checking the glycol in the condensed water, and then 1.3 g of tributylphosphite was added thereto to obtain an ISB-containing oligomer having a hydroxy value of 200 mgKOH/g, an acid value of 4 mgKOH/g or less and a number average molecular weight of 900.

### Step 1-2: Preparation of a prepolymer

747.9 g of terephthalic acid, 43.55 g of cyclohexanedicarboxylic acid, 59.1 g of bio-succinic acid, 364.7 g of neopentyl glycol, 46.5 g of bio-ethylene glycol, 67.5 g of bio-butylene glycol, 420.5 g of the ISB-containing oligomer prepared in the above step 1-1 and 3.53 g of monobutyl tin oxide (BT-300, SONGSTAB) as a catalyst were added in a five-necked flask equipped with a column having a nitrogen gas pipe and a cooling device, a stirrer, a thermometer and a heater, and the mixture was slowly heated. When the temperature of the mixture reached 120 to 160°C, the condensed water was drained. And from this time, the reaction mixture was reacted at an elevated temperature of about 240 to 250°C while checking the glycol in the condensed water, and then 1.3 g of tributylphosphite was added thereto to obtain a prepolymer having a hydroxy value of 40 to 60 mgKOH/g, an acid value of 7 to 14 mgKOH/g, a viscosity of 4,000 to 6,000 cPs (Brookfield viscosity at 175°C) and a number average molecular weight of 2,000 to 2,700.

### Step 2: Preparation of a polyester resin

1,200 g of the prepolymer prepared in the above step 1-2 and 147.9 g of trimellitic anhydride were added in a five-necked flask equipped with a column having a nitrogen gas pipe and a cooling device, a stirrer, a thermometer and a heater, and the mixture was heated at 165 to 215°C. Then, the reactant was maintained at a temperature of 175 to 205°C and reacted while removing the condensed water. Finally, in order to increase the degree of polymerization of the polyester resin, nitrogen excess or reduced pressure (50 to 200 mmHg) was used to remove unextracted condensed water and unreacted materials in the polyester resin, and then 5.8 g of ethyltriphenylphosphonium bromide was added thereto to prepare a polyester resin having desired properties. The resulting final polyester resin had an acid value of 54 mgKOH/g, a viscosity of 3,300 cPs (Brookfield viscosity at 200°C), a glass transition temperature of 59°C and a number average molecular weight of 3,600.

### [Example 2-4-1]

Excepting that 1) the amount of terephthalic acid was changed from 747.9 g to 664.8 g, the amount of neopentyl glycol used was changed from 364.7 g to 468.9 g, the amount of bio-butylene glycol was changed from 67.5 g to 45.1 g, and the amount of ISB-containing oligomer was changed from 420.5 g to 350.5 g in the step of preparation of the prepolymer; and 2) the amount of trimellitic anhydride was changed from 147.9 g to 131.8 g, the amount of adipic acid was changed from 0 g to 25.6 g, and the amount of ethyltriphenylphosphonium bromide was changed from 5.8 g to 5.9 g in the step of preparation of the polyester resin, a polyester resin was prepared by the same method as in Example 2-3-1. The resulting final polyester resin had an acid value of 52 mgKOH/g, a viscosity of 3,000 cPs (Brookfield viscosity at 200°C), a glass transition temperature of 58°C and a number average molecular weight of 3,800.

### [Comparative Example 2-1-1]

### Step 1: Preparation of a prepolymer

814.4 g of terephthalic acid, 16.62 g of isophthalic acid, 35.5 g of cyclohexanedicarboxylic acid, 21.93 g of adipic acid, 494.9 g of neopentyl glycol, 31.0 g of ethylene glycol, 22.55 g of 1,4-butylene glycol and 2.8 g of monobutyl tin oxide (BT-300, SONGSTAB) as a catalyst were added in a five-necked flask equipped with a column having a nitrogen gas pipe and a cooling device, a stirrer, a thermometer and a heater, and the mixture was slowly heated. When the temperature of the mixture reached 120 to 160°C, the condensed water was drained. And from this time, the reaction mixture was reacted at an elevated temperature of about 240 to 250°C while checking the glycol in the condensed water to obtain a prepolymer having a hydroxy value of 38 mgKOH/g, an acid value of 5 mgKOH/g and a number average molecular weight of 2,000.

### Step 2: Preparation of a polyester resin

1,200 g of the prepolymer prepared in the above step 1, 131.6 g of trimellitic anhydride and 25.7 g of adipic acid were added in a five-necked flask equipped with a column having a nitrogen gas pipe and a cooling device, a stirrer, a thermometer and a heater, and the mixture was heated at 165 to 215°C. Then, the reactant was maintained at the temperature of 175 to 205°C and reacted while removing the condensed water. Finally, in order to increase the degree of polymerization of the polyester resin, nitrogen excess or reduced pressure (50 to 200 mmHg) was used to remove unextracted condensed water and unreacted materials in the polyester resin, and then 5.5 g of ethyltriphenylphosphonium bromide was added thereto to obtain a polyester resin. The resulting final polyester resin had an acid value of 53 mg KOH/g, a viscosity of 3,600 cPs (Brookfield viscosity at 200°C), a glass transition temperature of 54°C and a number average molecular weight of 2,800.

### [Comparative Example 2-2-1]

Excepting that 1) the amount of isophthalic acid is changed from 16.62 g to 24.93 g, the amount of cyclohexanedicarboxylic acid is changed from 35.5 g to 26.13 g, the amount of adipic acid is changed from 21.93 g to 29.24 g, the amount of ethylene glycol is changed from 31 g to 15.5 g, and the amount of 1,4-butylene glycol was changed from 22.55 g to 36.1 g in the step of preparation of the prepolymer; and 2) the amount of trimellitic anhydride was changed from 131.6 g to 147.9 g, the amount of adipic acid was changed from 25.7 g to 0 g, and the amount of ethyltriphenylphosphonium bromide was changed from 5.5 g to 5.6 g in the step of preparation of the polyester resin, a polyester resin was prepared by the same method as in Comparative Example 2-1-1. The resulting final polyester resin had an acid value of 55 mgKOH/g, a viscosity of 3,500 cPs (Brookfield viscosity at 200°C), a glass transition temperature of 55°C and a number average molecular weight of 2,900.

### [Comparative Example 2-3-1]

Excepting that 1) the amount of isophthalic acid was changed from 16.62 g to 24.93 g, the amount of cyclohexanedicarboxylic acid was changed from 35.5 g to 43.55 g, the amount of adipic acid was changed from 21.93 g to 36.55 g, the amount of ethylene glycol was changed from 31 g to 46.5 g, and the amount of 1,4-butylene glycol was changed from 22.55 g to 22.50 g in the step of preparation of the prepolymer; and 2) the amount of trimellitic anhydride was changed from 131.6 g to 132.1 g, and the amount of adipic acid was changed from 25.7 g to 19.8 g in the step of preparation of the polyester resin, a polyester resin was prepared by the same method as in Comparative Example 2-1-1. The resulting final polyester resin had an acid value of 54 mgKOH/g, a viscosity of 3,300 cPs (Brookfield viscosity at 200°C), a glass transition temperature of 54°C and a number average molecular weight of 2,800.

The amounts of reactants used in Examples 2-1-1 to 2-4-1 and Comparative Examples 2-1-1 to 2-3-1, and the properties of the prepared polyester resin are shown in Table 4 below.

**[Table 4]**

| Component | | | Examples | | | | Comparative Examples | | |
|---|---|---|---|---|---|---|---|---|---|
| | | | 2-1-1 | 2-2-1 | 2-3-1 | 2-4-1 | 2-1-1 | 2-2-1 | 2-3-1 |
| Preparation of a prepolymer | 1 | Terephthalic acid (g) | 747.9 | 747.9 | 747.9 | 664.8 | 814.4 | 814.4 | 814.4 |
| | 2 | Isophthalic acid (g) | 24.93 | 16.62 | - | - | 16.62 | 24.93 | 24.93 |
| | 3 | Cyclohexanedicarboxylic acid (g) | - | - | 43.55 | 43.55 | 35.5 | 26.13 | 43.55 |
| | 4 | Adipic acid (g) | 36.55 | 24.3 | - | - | 21.93 | 29.24 | 36.55 |
| | 5 | Bio-succinic acid (g) | 59.1 | 59.1 | 59.1 | 59.1 | - | - | - |
| | 6 | Neopentyl glycol (g) | 364.7 | 468.9 | 364.7 | 468.9 | 494.9 | 494.9 | 494.9 |
| | 7 | Ethylene glycol (g) | - | - | - | - | 31.0 | 15.5 | 46.5 |
| | 8 | Bio-ethylene glycol (g) | 46.5 | 46.5 | 46.5 | 46.5 | - | - | - |
| | 9 | 1,4-butylene glycol (g) | - | - | - | - | 22.55 | 36.1 | 22.5 |
| | 10 | Bio-butylene glycol (g) | 67.5 | 45.1 | 67.5 | 45.1 | - | - | - |
| | 11 | ISB-containing Oligomer (g) | 420.5 | 350.5 | 420.5 | 350.5 | - | - | - |
| Preparation of a polyester resin | 1 | Prepolymer (g) | 1,200 | 1,200 | 1,200 | 1,200 | 1,200 | 1,200 | 1,200 |
| | 2 | Trimellitic anhydride (g) | 131.8 | 147.9 | 147.9 | 131.8 | 131.6 | 147.9 | 132.1 |
| | 3 | Adipic acid (g) | 25.6 | - | - | 25.6 | 25.7 | - | 19.8 |
| | 4 | ETPBr¹ (g) | 5.7 | 5.9 | 5.8 | 5.9 | 5.5 | 5.6 | 5.5 |
| Properties | Acid value² (mg KOH/g) | | 53 | 54 | 54 | 52 | 53 | 55 | 54 |
| | Viscosity³ (cPs) | | 3,300 | 3,100 | 3,300 | 3,000 | 3,600 | 3,500 | 3,300 |
| | Number average molecular weight⁴ (g/mol) | | 3,600 | 3,800 | 3,600 | 3,800 | 2,800 | 2,900 | 2,800 |
| | Glass transition temperature⁵ (°C) | | 59 | 60 | 59 | 58 | 54 | 55 | 54 |

| | | | | | | | | | |
|---|---|---|---|---|---|---|---|---|---|
| 1: Ethyltriphenylphosphonium bromide: additive that increases the reaction rate when a polyester resin is cured with an epoxy-based curing agent 2: The acid value was measured using a 0.1N-KOH methanol solution. 3: Viscosities were measured at 200°C using a Brookfield viscometer (Brookfield CAP2000 + Viscosmeter). 4: The number average molecular weight was measured by gel permeation chromatography (GPC) analysis. 5: The glass transition temperature was measured using a differential scanning calorimeter (DSC). | | | | | | | | | |

### Preparation of powder coatings

### [Example 2-1-2]

60 parts by weight of the polyester resin prepared in Example 2-1-1, 40 parts by weight of an epoxy resin (YD-013K, equivalent weight 800, Kukdo Chemical) as a curing agent, 0.5 part by weight of a pinhole inhibitor (Benzoin, Samchun), 1.5 parts by weight of a flow improver (PV-5, Worlee), 0.5 part by weight of polyethylene wax (PE 1544), 50 parts by weight of titanium dioxide (R-902+, Dupont-Titan Co.) as a white pigment and 10 parts by weight of barium sulfate (BSN-OF, Gemme) as an extender pigment were uniformly mixed and pulverized. Then, the powder was dispersed through a high-temperature extruder, and the solidified particles were again pulverized through a mixer, and a powder coating having a particle size of 120 µm m or less was prepared through sieving.

### [Examples 2-2-2 to 2-4-2 and Comparative Examples 2-1-2 to 2-3-2]

Excepting that the polyester resin was changed to the polyester resin prepared from Examples 2-2-1 to 2-4-1 and Comparative Examples 2-1-1 to 2-3-1, respectively, powder coatings were prepared by the same method as in Example 2-1-2.

The composition ratio by weight of the components of the powder coatings of Examples 2-1-2 to 2-4-2 and Comparative Examples 2-1-2 to 2-3-2 is shown in Table 5 below.

**[Table 5]**

| Component | Examples | | | | Comparative Examples | | |
|---|---|---|---|---|---|---|---|
| | 2-1-2 | 2-2-2 | 2-3-2 | 2-4-2 | 2-1-2 | 2-2-2 | 2-3-2 |
| Polyester resin | 60 | 60 | 60 | 60 | 60 | 60 | 60 |
| YD-013K | 40 | 40 | 40 | 40 | 40 | 40 | 40 |
| Benzoin | 0.5 | 0.5 | 0.5 | 0.5 | 0.5 | 0.5 | 0.5 |
| PV-5 | 1.5 | 1.5 | 1.5 | 1.5 | 1.5 | 1.5 | 1.5 |
| PE 1544 | 0.5 | 0.5 | 0.5 | 0.5 | 0.5 | 0.5 | 0.5 |
| Titanium dioxide | 50 | 50 | 50 | 50 | 50 | 50 | 50 |
| Barium sulfate | 10 | 10 | 10 | 10 | 10 | 10 | 10 |

### Preparation of coating film specimens

### [Example 2-1-3]

The powder coating prepared in Example 2-1-2 was applied to a 0.6-mm thick cold rolled sheet pretreated with zinc phosphate and cured under curing condition at 160°C for 15 minutes and at 170°C for 10 minutes to obtain a coating film specimen having a thickness of 90 ± 10 µm.

### [Examples 2-2-3 to 2-4-3 and Comparative Examples 2-1-3 to 2-3-3]

Excepting that the powder coating was changed to the powder coating prepared from Examples 2-2-2 to 2-4-2 and Comparative Examples 2-1-2 to 2-3-2, respectively, coating film specimens were prepared by the same method as in Example 2-1-3.

The properties of the prepared coating film specimens were measured by the above methods.

The properties of the measured coating film specimens are shown in Table 6 below.

**[Table 6]**

| | | Examples | | | | Comparative Examples | | |
|---|---|---|---|---|---|---|---|---|
| | | 2-1-3 | 2-2-3 | 2-3-3 | 2-4-3 | 2-1-3 | 2-2-3 | 2-3-3 |
| Appearance | Leveling | Good | Good | Good | Good | Good | Good | Good |
| | Pinhole | Good | Good | Good | Good | Good | Good | Good |
| | Gloss | 95% | 96% | 96% | 94% | 91% | 90% | 89% |
| Mechanical properties | Adhesiveness | 100/100 | 100/100 | 100/100 | 100/100 | 100/100 | 100/100 | 100/100 |
| | Flexibility | 8 mm | 9 mm | 8 mm | 9 mm | 5 mm | 6 mm | 4 mm |
| | Bending | ○ | ○ | ○ | ○ | × | × | × |
| | Impact | 1 kg/50 | 1 kg/50 | 1 kg/50 | 1 kg/50 | 1 kg/20 | 1 kg/20 | 1 kg/20 |
| Chemical resistance | Fouling resistance | 9 | 9 | 8+ | 8+ | 7 | 7 | 7 |
| | Solvent resistance | No gloss drop | No gloss drop | No gloss drop | No gloss drop | Slightly lowered gloss | Slightly lowered gloss | Slightly lowered gloss |
| | Alkali resistance | No problem | No problem | No problem | No problem | No problem | No problem | No problem |
| QUV (100 hours) | Gloss | 60% | 62% | 61% | 62% | 45% | 43% | 46% |
| | Color difference | 3.58 | 3.56 | 3.57 | 3.61 | 4.71 | 4.80 | 4.64 |
| Storage stability | | ⊚ | ⊚ | ⊚ | ⊚ | ⊚ | ○ | ○ |

As shown in Table 6, powder coating was prepared by using the polyester resins prepared in Examples 2-1-1 to 2-4-1 and Comparative Examples 2-1-1 to 2-3-1, respectively, and the properties of the coating film specimens prepared by curing the powder coating under the same curing conditions were compared. As a result, leveling, pinholes and gloss were all good in appearance.

In terms of mechanical properties, Examples 2-1-3 to 2-4-3 according to the present invention had excellent flexibility values of 8 mm or more and excellent bending, while Comparative Examples 2-1-3 and 2-3-3 had poor flexibility values ranging from 4 mm to 6 mm, and the bending was also poor. Also, in the case of Examples 2-1-3 to 2-4-3 according to the present invention, the impact values were 1 kg/50 (cracks were formed in the coating film specimen when 1 kg of weight was dropped from a height of 50 cm), while the impact values of Comparative Examples 2-1-3 to 2-3-3 were 1 kg/20 (cracks were formed in the coating film specimen when 1 kg of weight was dropped from a height of 20 cm). Thus, Examples 2-1-3 to 2- 4-3 are better in impact resistance than Comparative Examples 2-1-3 to 2-3-3.

In terms of chemical resistance, the coating film specimens of Examples 2-1-3 to 2-4-3 according to the present invention had a fouling resistance of about 2 to 3 higher than the coating film specimens of Comparative Examples 2-1-3 to 2-3-3, and there was a slight difference in solvent resistance, and the alkali resistance of all of them was good.

In terms of QUV performance test (weatherability test), the gloss of the coating film specimens of Examples 2-1-3 to 2-4-3 according to the present invention was as good as 60 to 62%, while the gloss of the coating film specimens of Comparative Examples 2-1-3 to 2-3-3 was poor at 50% or less. In terms of color difference, the color difference of the coating film specimens of Examples 2-1-3 to 2-4-3 according to the present invention was lower than that of the coating film specimens of Comparative Examples 1-1-3 to 1-3-3, and thus had better weatherability.

In terms of storage stability, the coating film specimens of Examples 2-1-3 to 2-4-3 according to the present invention were also superior to the coating film specimens of Comparative Examples 2-1-3 to 2-3-3.

As in the present invention, when a polyester resin is prepared using an oligomer comprising ISB and a biomass-derived compound, it is possible to improve the synthetic reactivity of the ISB with respect to the resin, and increase the total content of the biomass-derived compound in the polyester resin, which can help solve the problem of global warming and depletion of petroleum resources.

### III. In the case wherein the repeating unit comprising a unit derived from an anhydrosugar alcohol or a derivative thereof is: a prepolymer block prepared from a monomer mixture comprising a diol component comprising an anhydrosugar alcohol, and a polybasic acid component

### Preparation of polyester resin

### [Example 3-1-1]

### Step 1: Preparation of a prepolymer

25.13 g of isophthalic acid, 404 g of terephthalic acid, 43.55 g of cyclohexanedicarboxylic acid, 36.55 g of adipic acid, 468.9 g of neopentyl glycol, 38 g of isosorbide, 46.5 g of ethylene glycol, 22.55 g of 1,4-butylene glycol, 26.55 g of diethylene glycol and 3.2 g of monobutyl tin oxide (BT-300, SONGSTAB, Songwon Industrial Co., Ltd.) as a catalyst were added in a five-necked flask equipped with a column having a nitrogen gas pipe and a cooling device, a stirrer, a thermometer and a heater, and the mixture was slowly heated. When the temperature of the mixture reached 120 to 160°C, the condensed water was drained. And from this time, the reaction mixture was reacted at an elevated temperature of about 240 to 250°C while checking the glycol in the condensed water, and then 1.3 g of tributylphosphite was added thereto to obtain a prepolymer having a hydroxy value of 34 mgKOH/g, an acid value of 5 mgKOH/g, a viscosity of 4,500 cPs (Brookfield viscosity at 175°C) and a number average molecular weight of 2,100.

### Step 2: Preparation of a polyester resin

1,200 g of the prepolymer prepared in the above step 1, 124.3 g of trimellitic anhydride and 25.7 g of adipic acid were added in a five-necked flask equipped with a column having a nitrogen gas pipe and a cooling device, a stirrer, a thermometer and a heater, and the mixture was heated at 220 to 230°C. Then, the reactant was maintained at the temperature of 220 to 230°C and reacted while removing the condensed water. Finally, in order to increase the degree of polymerization of the polyester resin, nitrogen excess or reduced pressure (50 to 200 mmHg) was used to remove unextracted condensed water and unreacted materials in the polyester resin, and then 4.3 g of ethyltriphenylphosphonium bromide was added thereto to prepare a polyester resin having desired properties. The resulting final polyester resin had an acid value of 52 mgKOH/g, a viscosity of 3,500 cPs (Brookfield viscosity at 200°C), a glass transition temperature of 55°C and a number average molecular weight of 3,800.

### [Example 3-2-1]

Excepting that 1) the amount of isophthalic acid was changed from 25.13 g to 0 g, the amount of terephthalic acid was changed from 404 g to 431 g, the amount of adipic acid was changed from 36.55 g to 58.48 g, the amount of isosorbide was changed from 38 g to 67 g, the amount of ethylene glycol was changed from 46.5 g to 31 g, and the amount of 1,4-butylene glycol was changed from 22.55 g to 45 g in the step of preparation of the prepolymer; and 2) the amount of trimellitic anhydride was changed from 124.3 g to 127.1 g in the step of preparation of the polyester resin, a polyester resin was prepared by the same method as in Example 3-1-1. The resulting final polyester resin had an acid value of 53 mgKOH/g, a viscosity of 3,500 cPs (Brookfield viscosity at 200°C), a glass transition temperature of 56°C and a number average molecular weight of 3,700.

### [Example 3-3-1]

Excepting that 1) the amount of isophthalic acid was changed from 25.13 g to 23.93 g, the amount of terephthalic acid was changed from 404 g to 410 g, the amount of adipic acid was changed from 36.55 g to 58.48 g, the amount of isosorbide was changed from 38 g to 97 g, and the amount of 1,4-butylene glycol was changed from 22.55 g to 45 g in the step of preparation of the prepolymer; and 2) the amount of trimellitic anhydride was changed from 124.3 g to 125.6 g in the step of preparation of the polyester resin, a polyester resin was prepared by the same method as in Example 3-1-1. The resulting final polyester resin had an acid value of 54 mgKOH/g, a viscosity of 3,300 cPs (Brookfield viscosity at 200°C), a glass transition temperature of 58°C and a number average molecular weight of 3,700.

### [Example 3-4-1]

Excepting that 1) the amount of isophthalic acid was changed from 25.13 g to 0 g, the amount of terephthalic acid was changed from 404 g to 477 g, the amount of adipic acid was changed from 36.55 g to 80.41 g, the amount of isosorbide was changed from 38 g to 147 g, the amount of ethylene glycol was changed from 46.5 g to 31 g, and the amount of 1,4-butylene glycol was changed from 22.55 g to 45 g in the step of preparation of the prepolymer; and 2) the amount of trimellitic anhydride was changed from 124.3 g to 136.7 g in the step of preparation of the polyester resin, a polyester resin was prepared by the same method as in Example 3-1-1. The resulting final polyester resin had an acid value of 54 mgKOH/g, a viscosity of 3,200 cPs (Brookfield viscosity at 200°C), a glass transition temperature of 60°C and a number average molecular weight of 3,700.

### [Comparative Example 3-1-1]

### Step 1: Preparation of a prepolymer

16.51 g of isophthalic acid, 531 g of terephthalic acid, 26.13 g of cyclohexanedicarboxylic acid, 14.62 g of adipic acid, 621 g of neopentyl glycol, 31 g of ethylene glycol, 22 g of 1,4-butylene glycol, 10.12 g of trimethylolpropane and 3.2 g of monobutyl tin oxide (BT-300, SONGSTAB) as a catalyst were added in a four-necked flask equipped with a column having a nitrogen gas pipe and a cooling device, a stirrer, a thermometer and a heater, and the mixture was slowly heated. When the temperature of the mixture reached 120 to 160°C, the condensed water was drained. And from this time, the reaction mixture was reacted at an elevated temperature of about 240°C to 250°C while checking the glycol in the condensed water to obtain a prepolymer having a hydroxy value of 34 mgKOH/g, an acid value of 5 mgKOH/g and a number average molecular weight of 2,100.

### Step 2: Preparation of a polyester resin

1,200 g of the prepolymer prepared in the above step 1, 104.1 g of trimellitic anhydride and 20.4 g of 1,4-cyclohexanedicarboxylic acid were added in a five-necked flask equipped with a column having a nitrogen gas pipe and a cooling device, a stirrer, a thermometer and a heater, and the mixture was heated at 220 to 230°C. Then, the reactant was maintained at the temperature of 220 to 230°C and reacted while removing the condensed water. Finally, in order to increase the degree of polymerization of the polyester resin, nitrogen excess or reduced pressure (50 to 200 mmHg) was used to remove unextracted condensed water and unreacted materials in the polyester resin, and then 4.3 g of ethyltriphenylphosphonium bromide was added thereto to obtain a polyester resin. The resulting final polyester resin had an acid value of 51 mgKOH/g, a viscosity of 3,600 cPs (Brookfield viscosity at 200°C), a glass transition temperature of 54°C and a number average molecular weight of 2,800.

### [Comparative Example 3-2-1]

Excepting that 1) the amount of isophthalic acid was changed from 16.51 g to 0 g, the amount of adipic acid was changed from 14.62 g to 30.93 g, the amount of neopentyl glycol was changed from 621 g to 647 g, the amount of ethylene glycol was changed from 31 g to 51 g, the amount of 1,4-butylene glycol was changed from 22 g to 0 g, and the amount of trimethylolpropane was changed from 10.12 g to 8.94 g in the step of preparation of the prepolymer; and 2) the amount of trimellitic anhydride was changed from 104.1 g to 134.1 g and the amount of 1,4-cyclohexanedicarboxylic acid was changed from 20.4 g to 0 g in the step of preparation of the polyester resin, a polyester resin was prepared by the same method as in Comparative Example 3-1-1. The resulting final polyester resin had an acid value of 51 mgKOH/g, a viscosity of 3,500 cPs (Brookfield viscosity at 200°C), a glass transition temperature of 55°C and a number average molecular weight of 3,000.

### [Comparative Example 3-3-1]

Excepting that 1) the amount of isophthalic acid was changed from 16.51 g to 16.64 g, the amount of adipic acid was changed from 14.62 g to 14.61 g, the amount of 1,4-butylene glycol was changed from 22 g to 22.55 g, and the amount of trimethylolpropane was changed from 10.12 g to 8.94 g in the step of preparation of the prepolymer; and 2) the amount of the trimellitic anhydride was changed from 104.1 g to 120.2 g and the amount of 1,4-cyclohexanedicarboxylic acid was changed from 20.4 g to 20 g in the step of preparation of the polyester resin, a polyester resin was prepared by the same method as in Comparative Example 3-1-1. The resulting final polyester resin had an acid value of 52 mgKOH/g, a viscosity of 3,600 cPs (Brookfield viscosity at 200°C), a glass transition temperature of 55°C and a number average molecular weight of 3,000.

### [Comparative Example 3-4-1]

Excepting that 1) the amount of isophthalic acid was changed from 16.51 g to 0 g, the amount of adipic acid was changed from 14.62 g to 30.5 g, the amount of ethylene glycol was changed from 31 g to 50.8 g, the amount of 1,4-butylene glycol was changed from 22 g to 0 g and the amount of trimethylolpropane was changed from 10.12 g to 10.13 g in the step of preparation of the prepolymer; and 2) the amount of the trimellitic anhydride was changed from 104.1 g to 139.2 g and the amount of 1,4-cyclohexanedicarboxylic acid used was changed from 20.4 g to 0 g in the step of preparation of the polyester resin, a polyester resin was prepared by the same method as in Comparative Example 3-1-1. The resulting final polyester resin had an acid value of 52 mgKOH/g, a viscosity of 3,600 cPs (Brookfield viscosity at 200°C), a glass transition temperature of 54°C and a number average molecular weight of 2,900.

The amounts of reactants used in Examples 3-1-1 to 3-4-1 and Comparative Examples 3-1-1 to 3-4-1 and the properties of the prepared polyester resin are shown in Table 7 below. In Examples 3-1-1 to 3-4-1, the amounts of isosorbide were 3.0 wt%, 5.0 wt%, 7.1 wt%, and 9.9 wt%, respectively, based on the total weight of the polyester resin.

**[Table 7]**

| Component | | | Examples | | | | Comparative Examples | | | |
|---|---|---|---|---|---|---|---|---|---|---|
| | | | 3-1-1 | 3-2-1 | 3-3-1 | 3-4-1 | 3-1-1 | 3-2-1 | 3-3-1 | 3-4-1 |
| Preparation of a prepolymer | 1 | Isophthalic acid (g) | 25.13 | - | 23.93 | - | 16.51 | - | 16.64 | - |
| | 2 | Terephthalic acid (g) | 404.0 | 431.0 | 410.0 | 477.0 | 531.0 | 531.0 | 531.0 | 531.0 |
| | 3 | Cyclohexanedicarboxylic acid (g) | 43.55 | 43.55 | 43.55 | 43.55 | 26.13 | 26.13 | 26.13 | 26.13 |
| | 4 | Adipic acid (g) | 36.55 | 58.48 | 58.48 | 80.41 | 14.62 | 30.93 | 14.61 | 30.50 |
| | 5 | Neopentyl glycol (g) | 468.9 | 468.9 | 468.9 | 468.9 | 621.0 | 647.0 | 621.0 | 621.0 |
| | 6 | Isosorbide (g) | 38.00 | 67.00 | 97.00 | 147.0 | - | - | - | - |
| | 7 | Ethylene glycol (g) | 46.5 | 31.0 | 46.5 | 31.0 | 31.0 | 51.0 | 31.0 | 50.8 |
| | 8 | 1,4-butylene glycol (g) | 22.55 | 45.0 | 45.0 | 45.0 | 22.00 | - | 22.55 | - |
| | 9 | Trimethylolpropane (g) | - | - | - | - | 10.12 | 8.94 | 8.94 | 10.13 |
| | 10 | Diethylene glycol (g) | 26.55 | 26.55 | 26.55 | 26.55 | - | - | - | - |
| Preparation of a polyester resin | 1 | Trimellitic anhydride (g) | 124.3 | 127.1 | 125.6 | 136.7 | 104.1 | 134.1 | 120.2 | 139.2 |
| | 2 | Cyclohexanedicarboxylic acid (g) | - | - | - | - | 20.4 | - | 20.0 | - |
| | 3 | Adipic acid (g) | 25.7 | 25.7 | 25.7 | 25.7 | - | - | - | - |
| | 4 | ETPBr¹ (g) | 4.3 | 4.3 | 4.3 | 4.3 | 4.3 | 4.3 | 4.3 | 4.3 |
| Properties | Acid value² (mg KOH/g) | | 52 | 53 | 54 | 54 | 51 | 51 | 52 | 52 |
| | Viscosity³ (cPs) | | 35P | 35P | 33P | 32P | 36P | 35P | 36P | 36P |
| | Number average molecular weight⁴ (g/mol) | | 3,800 | 3,700 | 3,700 | 3,600 | 2,800 | 3,000 | 3,000 | 2,900 |
| | Glass transition temperature⁵ (°C) | | 55°C | 56°C | 58°C | 60°C | 54°C | 55°C | 55°C | 54°C |

| | | | | | | | | | | |
|---|---|---|---|---|---|---|---|---|---|---|
| 1: Ethyltriphenylphosphonium bromide: additive that increases the reaction rate when a polyester resin is cured with an epoxy-based curing agent 2: The acid value was measured using a 0.1N-KOH methanol solution. 3: Viscosities were measured at 200°C using a Brookfield viscometer (Brookfield CAP2000 + Viscosmeter). 4: The number average molecular weight was measured by gel permeation chromatography (GPC) analysis. 5: The glass transition temperature was measured using a differential scanning calorimeter (DSC). | | | | | | | | | | |

### Preparation of powder coatings

### [Example 3-1-2]

60 parts by weight of the polyester resin prepared in Example 3-1-1, 40 parts by weight of an epoxy resin (YD-013K, equivalent weight 800, Kukdo Chemical) as a curing agent, 0.5 part by weight of a pinhole inhibitor (Benzoin, Samchun), 1.5 parts by weight of a flow improver (PV-5, Worlee), 0.5 part by weight of polyethylene wax (PE 1544), 50 parts by weight of titanium dioxide (R-902+, Dupont-Titan Co.) as a white pigment and 10 parts by weight of barium sulfate (BSN-OF, Gemme) as an extender pigment were uniformly mixed and pulverized. Then, the powder was dispersed through a high-temperature extruder, and the solidified particles were again pulverized through a mixer, and a powder coating having a particle size of 120 µm or less was prepared through sieving.

### [Examples 3-2-2 to 3-4-2 and Comparative Examples 3-1-2 to 3-4-2]

Excepting that the polyester resin was changed to the polyester resin prepared from Examples 3-2-1 to 3-4-1 and Comparative Examples 3-1-1 to 3-4-1, respectively, powder coatings were prepared by the same method as in Example 3-1-2.

The composition ratio by weight of the components of the powder coatings of Examples 3-1-2 to 3-4-2 and Comparative Examples 3-1-2 to 3-4-2 is shown in Table 8 below.

**[Table 8]**

| Component | Examples | | | | Comparative Examples | | | |
|---|---|---|---|---|---|---|---|---|
| | 3-1-2 | 3-2-2 | 3-3-2 | 3-4-2 | 3-1-2 | 3-2-2 | 3-3-2 | 3-4-2 |
| Polyester resin | 60 | 60 | 60 | 60 | 60 | 60 | 60 | 60 |
| YD-013K | 40 | 40 | 40 | 40 | 40 | 40 | 40 | 40 |
| Benzoin | 0.5 | 0.5 | 0.5 | 0.5 | 0.5 | 0.5 | 0.5 | 0.5 |
| PV-5 | 1.5 | 1.5 | 1.5 | 1.5 | 1.5 | 1.5 | 1.5 | 1.5 |
| PE 1544 | 0.5 | 0.5 | 0.5 | 0.5 | 0.5 | 0.5 | 0.5 | 0.5 |
| Titanium dioxide | 50 | 50 | 50 | 50 | 50 | 50 | 50 | 50 |
| Barium sulfate | 10 | 10 | 10 | 10 | 10 | 10 | 10 | 10 |

### Preparation of coating film specimens

### [Example 3-1-3]

The powder coating prepared in Example 3-1-2 was applied to a 0.6-mm thick cold rolled sheet pretreated with zinc phosphate and cured under curing condition at 160°C for 15 minutes and at 170°C for 10 minutes to obtain a coating film specimen having a thickness of 90 ± 10 µm.

### [Examples 3-2-3 to 3-4-3 and Comparative Examples 3-1-3 to 3-4-3]

### Excepting that the powder coating was changed to the powder coating prepared from Examples 3-2-2 to 3-4-2 and Comparative Examples 3-1-2 to 3-4-2, respectively, coating film specimens were prepared by the same method as in Example 3-1-3.

The properties of the prepared coating film specimens were measured by the above methods and the following hardness evaluation method.

### <Hardness evaluation method>

According to ASTM D3363, the hardness was measured by scratching the surface of the coating film specimen using a pencil (Mitsubishi), and the hardness was indicated according to the level of scratching. The hardness value is represented by 9H to 1H, F, HB, and 1B to 6B according to the hardness and concentration of the pencil core. 9H is the highest value of hardness, and the hardness is sequentially decreased. 6B indicates the lowest value of hardness.

The properties of the measured coating film specimens are shown in Table 9 below.

**[Table 9]**

| | | Examples | | | | Comparative Examples | | | |
|---|---|---|---|---|---|---|---|---|---|
| | | 3-1-3 | 3-2-3 | 3-3-3 | 3-4-3 | 3-1-3 | 3-2-3 | 3-3-3 | 3-4-3 |
| Curing condition | | 160°C*15min / 170°C*10min | | | | | | | |
| Appearance | Leveling | Good | Good | Good | Good | Good | Good | Good | Good |
| | Pinhole | Good | Good | Good | Good | Good | Good | Good | Good |
| | Gloss | 93% | 94% | 94% | 93% | 90% | 89% | 90% | 91% |
| Mechanical properties | Adhesiveness | 100/100 | 100/100 | 100/100 | 100/100 | 100/100 | 100/100 | 100/100 | 100/100 |
| | Flexibility | 7 mm | 7 mm | 8 mm | 9 mm | 6 mm | 5 mm | 6 mm | 5 mm |
| | Bending | ○ | ○ | ○ | ○ | X | X | X | X |
| | Impact | 1.0 Kg/50 | 1.0 Kg/50 | 1.0 Kg/50 | 1.0 Kg/50 | 1.0 Kg/20 | 1.0 Kg/20 | 1.0 Kg/20 | 1.0 Kg/20 |
| | Hardness | F∼1H | F∼1H | 1H | 1H∼2H | F | F | F | F |
| Chemical resistance | Fouling resistance | 9 | 9 | 8+ | 8+ | 8+ | 7 | 7 | 7 |
| | Solvent resistance | No gloss drop | No gloss drop | No gloss drop | No gloss drop | Slightly lowered gloss | Slightly lowered gloss | Slightly lowered gloss | Slightly lowered gloss |
| | Alkali resistance | No problem | No problem | No problem | No problem | No problem | No problem | No problem | No problem |
| QUV (100 hours) | Gloss | 60% | 61% | 64% | 66% | 44% | 43% | 43% | 45% |
| | Color difference | 3.57 | 3.48 | 3.40 | 3.37 | 4.41 | 4.30 | 4.28 | 4.31 |
| Storage stability | | ⊚ | ⊚ | ⊚ | ⊚ | ○ | ○ | ○ | ○ |

As shown in Table 9, powder coating was prepared by using the polyester resins prepared in Examples 3-1-1 to 3-4-1 and Comparative Examples 3-1-1 to 3-4-1, respectively, and the properties of the coating film specimens prepared by curing the powder coating under the same curing conditions were compared. As a result, leveling, pinholes and gloss were all good in appearance.

In terms of mechanical properties, Examples 3-1-3 to 3-4-3 according to the present invention has excellent flexibility value of 7 mm or more, excellent impact value of 1.0 Kg/50 and excellent bending, while Comparative Example 3-1-3 to 3-4-3 had poor flexibility values ranging from 5 mm to 6 mm, poor impact value of 1.0 Kg/20 and the poor bending. In particular, in terms of hardness, the coating film specimens of Examples 3-1-3 to 3-4-3 according to the present invention were superior to the coating film specimens of Comparative Examples 3-1-3 to 3-4-3. Among the examples according to the present invention, as the amount of isosorbide in the polyester resin increased, the other properties were satisfied and the hardness tended to increase.

In terms of chemical resistance, the coating film specimens of Examples 3-1-3 to 3-4-3 according to the present invention had a fouling resistance of about 2 to 3 higher than the coating film specimens of Comparative Examples 3-1-3 to 3-4-3, and there was a slight difference in solvent resistance, and the alkali resistance was good for all of them.

In terms of QUV performance test (weatherability test), the gloss of the coating film specimens of Examples 3-1-3 to 3-4-3 according to the present invention was relatively good at 60 to 66%, while the gloss of the coating film specimens of Comparative Examples 3-1-3 to 3-4-3 was poor at 50% or less. In terms of color difference, the color difference of the coating film specimens of Examples 3-1-3 to 3-4-3 according to the present invention was lower than that of the coating film specimens of Comparative Examples 3-1-3 to 3-4-3, and thus had the better weatherability. In particular, among the Examples according to the present invention, as the content of isosorbide in the polyester resin increases, the other properties are satisfied and the weatherability is improved.

In terms of storage stability, the coating film specimens of Examples 3-1-3 to 3-4-3 according to the present invention were also superior to the coating film specimens of Comparative Examples 3-1-3 to 3-4-3.

## Claims

1. A polyester resin comprising: a repeating unit comprising a unit derived from an anhydrosugar alcohol or a derivative thereof; and a repeating unit derived from a polybasic acid component.

2. The polyester resin according to claim 1, wherein the repeating unit comprising a unit derived from an anhydrosugar alcohol or a derivative thereof is:
a repeating unit derived from a diol component comprising an anhydrosugar alcohol-alkylene glycol as an adduct obtained by reacting a terminal hydroxyl group of an anhydrosugar alcohol with an alkylene oxide;
an oligomer block prepared from a monomer mixture comprising a biomass-derived diol comprising an anhydrosugar alcohol, and a biomass-derived dibasic acid; or
a prepolymer block prepared from a monomer mixture comprising a diol component comprising an anhydrosugar alcohol, and a polybasic acid component.

3. The polyester resin according to claim 2, wherein the repeating unit comprising a unit derived from an anhydrosugar alcohol or a derivative thereof is:
a repeating unit derived from a diol component comprising an anhydrosugar alcohol-alkylene glycol as an adduct obtained by reacting a terminal hydroxyl group of anhydrosugar alcohol with an alkylene oxide.

4. The polyester resin according to claim 2, wherein the repeating unit comprising a unit derived from an anhydrosugar alcohol or a derivative thereof is:
an oligomer block prepared from a monomer mixture comprising a biomass-derived diol comprising an anhydrosugar alcohol, and a biomass-derived dibasic acid, and
wherein the polyester resin comprises, as an additional repeating unit, a diol component other than an anhydrosugar alcohol.

5. The polyester resin according to claim 2, wherein the repeating unit comprising a unit derived from an anhydrosugar alcohol or a derivative thereof is:
a prepolymer block prepared from a monomer mixture comprising a diol component comprising an anhydrosugar alcohol, and a polybasic acid component.

6. The polyester resin according to any one of claims 1 to 5, wherein the anhydrosugar alcohol is selected from the group consisting of isosorbide, isomannide, isoidide or mixtures thereof.

7. The polyester resin according to any one of claims 2, 3 and 5, wherein the diol component further comprises a diol compound other than an anhydrosugar alcohol or an anhydrosugar alcohol-alkylene glycol.

8. The polyester resin according to claim 7, wherein the diol compound other than an anhydrosugar alcohol or an anhydrosugar alcohol-alkylene glycol is an aliphatic diol, an alicyclic diols, an aromatic diol or a combination thereof.

9. The polyester resin according to claim 8, wherein the aliphatic diol is a linear or branched aliphatic diol having 2 to 8 carbon atoms; the alicyclic diol is an alicyclic diol having 5 to 20 carbon atoms comprising 1 to 4 5-membered ring structures or 6- membered ring structures; and the aromatic diol is an aromatic diol having 6 to 20 carbon atoms comprising 1 to 4 aromatic ring structures.

10. The polyester resin according to claim 8, wherein
the aliphatic diol is selected from the group consisting of ethylene glycol, diethylene glycol, triethylene glycol, 1,3-propanediol, 1,2-propanediol, 1,4-butanediol, 1,3-butanediol, 1,2-butanediol, 2,2-dimethyl-1,3-propanediol, pentanediol, hexanediol, heptanediol or combinations thereof;
the alicyclic diol is selected from the group consisting of 1,4-cyclohexanediol, 1,3-cyclohexanediol, 1,2-cyclohexanediol, 1,4-cyclohexanedimethanol, 1,3-cyclohexanedimethanol, 1,2-cyclohexanedimethanol, tetramethylcyclobutanediol, tricyclodecanedimethanol, adamantanediol or combinations thereof; and
the aromatic diol is selected from the group consisting of bisphenol A, 4,4'-dihydroxy-diphenylsulfone, 4,4'-biphenol, hydroquinone, 4,4'-dihydroxy-diphenyl ether, 3-(4-hydroxyphenoxy)phenol, bis(4-hydroxyphenyl)sulfide or combinations thereof.

11. The polyester resin according to any one of claims 2 to 5, wherein the diol component comprises 1 to 90 mol% of anhydrosugar alcohol or anhydrosugar alcohol-alkylene glycol, and 10 to 99 mol% of a diol compound other than anhydrosugar alcohol or anhydrosugar alcohol-alkylene glycol, based on 100 mol% of total diol component.

12. The polyester resin according to any one of claims 1 to 5, wherein the polybasic acid component is a dibasic acid, a tribasic acid or a mixture thereof.

13. The polyester resin according to claim 12, wherein the dibasic acid is selected from the group consisting of an aromatic dicarboxylic acid having 8 to 14 carbon atoms, an aliphatic dicarboxylic acid having 4 to 12 carbon atoms or combinations thereof.

14. The polyester resin according to claim 12, wherein the dibasic acid is selected from the group consisting of terephthalic acid, isophthalic acid, naphthalenedicarboxylic acid, diphenyldicarboxylic acid, cyclohexanedicarboxylic acid, phthalic acid, sebacic acid, succinic acid, maleic acid, fumaric acid, adipic acid, glutaric acid or combinations thereof; and the tribasic acid is trimellitic acid or its anhydride.

15. The polyester resin according to claim 2 or 3, wherein the alkylene oxide is ethylene oxide, propylene oxide or a mixture thereof.

16. The polyester resin according to claim 5, wherein the amount of the anhydrosugar alcohol comprised as the repeating unit is 1 to 15% by weight based on 100% by weight of the total amount of the polyester resin.

17. The polyester resin according to claim 4, wherein the diol component other than anhydrosugar alcohol is an aliphatic diol, an alicyclic diol, an aromatic diol or a combination thereof.

18. The polyester resin according to claim 2 or 4, wherein the biomass-derived diol comprises bio-ethylene glycol, bio-diethylene glycol, bio-butylene glycol or a combination thereof, together with anhydrosugar alcohol.

19. The polyester resin according to claim 2 or 4, wherein the biomass-derived dibasic acid is bio-succinic acid, bio-adipic acid or a combination thereof.

20. A method for preparing a polyester resin, comprising the steps of:
(1) preparing a prepolymer by reacting a repeating unit comprising a unit derived from an anhydrosugar alcohol or a derivative thereof with a polybasic acid component; and
(2) preparing a polyester resin by reacting the prepolymer prepared in step (1) with a polybasic acid component.

21. The method according to claim 20, wherein step (1) comprises the steps of:
(1-1) preparing an anhydrosugar alcohol-alkylene glycol as an adduct by reacting an anhydrosugar alcohol with an alkylene oxide; and
(1-2) preparing a prepolymer by reacting a diol component comprising the anhydrosugar alcohol-alkylene glycol prepared in step (1-1) with a polybasic acid component.

22. The method according to claim 21, wherein the prepolymer obtained in step (1-2) has a hydroxy value of 30 to 40 mgKOH/g, an acid value of 1 to 10 mgKOH/g, a viscosity of 4,000 to 6,000 cPs (Brookfield viscosity at 175°C) and a number average molecular weight of 1,500 to 2,500.

23. The method according to claim 21, wherein the polyester resin obtained in step (2) has an acid value of 40 to 60 mg KOH/g, a viscosity of 2,000 to 6,000 cPs (Brookfield viscosity at 200°C), a glass transition temperature of 55 to 100°C and a number average molecular weight of 3,000 to 5,000.

24. The method according to claim 20, wherein step (1) comprises the steps of:
(1-1) preparing an anhydrosugar alcohol-containing oligomer by reacting a monomer mixture comprising a biomass-derived diol comprising an anhydrosugar alcohol and a biomass-derived dibasic acid; and
(1-2) preparing a prepolymer by reacting a diol component comprising the anhydrosugar alcohol-containing oligomer prepared in step (1-1) with a polybasic acid component.

25. The method according to claim 24, wherein the anhydrosugar alcohol-containing oligomer obtained in step (1-1) has a hydroxy value of 150 to 250 mgKOH/g, an acid value of 1 to 10 mgKOH/g and a number average molecular weight of 500 to 1,500.

26. The method according to claim 24, wherein the prepolymer obtained in step (1-2) has a hydroxy value of 30 to 60 mgKOH/g, an acid value of 1 to 15 mgKOH/g, a viscosity of 4,000 to 6,000 cPs (Brookfield viscosity at 175°C) and a number average molecular weight of 1,500 to 2,700.

27. The method according to claim 24, wherein the polyester resin obtained in step (2) has an acid value of 40 to 60 mgKOH/g, a viscosity of 2,000 to 6,000 cPs (Brookfield viscosity at 200°C), a glass transition temperature of 55 to 100°C and a number average molecular weight of 3,000 to 5,000.

28. The method according to claim 20, wherein step (1) is:
A step of preparing a prepolymer by reacting a diol component comprising an anhydrosugar alcohol with a polybasic acid component.

29. The method according to claim 28, wherein the prepolymer obtained in step (1) has a hydroxy value of 30 to 60 mgKOH/g, an acid value of 1 to 15 mgKOH/g, a viscosity of 4,000 to 6,000 cPs (Brookfield viscosity at 175°C) and a number average molecular weight of 1,500 to 2,700.

30. The method according to claim 28, wherein the polyester resin obtained in step (2) has an acid value of 40 to 60 mgKOH/g, a viscosity of 2,000 to 6,000 cPs (Brookfield viscosity at 200°C), a glass transition temperature of 55 to 100°C and a number average molecular weight of 3,000 to 5,000.

31. A powder coating composition comprising a polyester resin according to any one of claims 1 to 19 and a curing agent.

32. The powder coating composition according to claim 31, wherein the curing agent is an epoxy based curing agent.
